# EUROPEAN PATENT APPLICATION

(11) **EP 1 143 360 A2**
(43) Date of publication of application: **10.10.2001**
(21) Application number: 00125868.0
(22) Date of filing: 24.11.2000
(51) Int. Cl.: G06F 17/60

(54) **Electronic coupon transaction system**

(30) Priority: 05.04.2000 JP 2000102957; 06.09.2000 JP 2000269962
(71) Applicant: Forval La Naissance, Inc., Tokyo (JP)
(72) Inventor: Hasegawa, Takashi, Forval La Naissance, Inc., Tokyo (JP); Taguchi, Yoshihiko, Forval La Naissance, Inc., Tokyo (JP)
(74) Representative: Strehl Schübel-Hopf & Partner

(57) **Abstract**

An electronic coupon transaction system in which the use of a coupon can be promoted by trading an electronic coupon itself and, therefore, profits will be brought both to a provider of goods etc. for which a coupon is issued and to a user of a coupon is provided. An electronic coupon transaction system 1 comprises a main computer 11 for helping to issue and use an electronic coupon, a seller terminal 30A for sending selling information, a WWW server 12 for publishing selling information, a buying applicant terminal 30B, a financial institution terminal 60, communication line 50, etc. The main computer 11 transfers the ownership of a coupon. The WWW server 12 publishes selling information DA1b from seller Cs so that it can be read. If seller Cs and buying applicant Cc reach agreement, the agreement is confirmed with agreement buttons as a intent confirming method, the settlement of the price and a transfer of a coupon are performed.

## Description

### FIELD OF THE INVENTION

The present invention relates to an electronic coupon transaction system in which coupons being exchangeable for various goods and services, as such, are traded and an electronic coupon use supporting system for supporting the use of coupons electronically generated and issued.

### BACKGROUND OF THE INVENTION

Sometimes coupons were used in conventional transactions of goods and services. Coupons serve as discount, complimentary, or premium tickets. Some of coupons are printed on inserts of newspapers and magazines or take the form of a pamphlet, such as a coupon book. For example, if users of these coupons show the inserts at stores, then they can receive discount services of goods etc. corresponding to the coupons.

Coupons which are distributed (and stored) as electronic information and are used after, for example, printing by a printer are also known. In a patent gazette on Japanese Patent Laid-Open Publication No.Heill-346352, for example, "Coupon generating apparatus, server apparatus, and receiver" for printing out coupons by a household printer with broadcast waves, such as television, is disclosed. In a patent gazette on Japanese Patent Laid-Open Publication No.Heill-328269 , "Electronic coupon system and electronic coupon issuing and verifying method" which makes it possible to detect the forgery or raising of coupons or unfair use of coupons by third parties even in the case of printing and using coupons issued electronically is also disclosed. Moreover, in a patent gazette on Japanese Patent Laid-Open Publication No.Heill-203558, for example, "Coupon issuing system" for adding a predetermined number of points in order and recording the total number of points on customers ' magnetic cards (or flash memory cards) by a coupon issuing machine, issuing coupons by the coupon issuing machine in the case of the total number of points reaching a reference number of points, and subtracting the reference number of points from the total number of points and recording the remainder on the magnetic cards is disclosed.

As stated above, electronic coupons using no paper coupon at all, that is to say, coupons issued and distributed as electronic information and used as electronic information are also known. In a patent gazette on Japanese Patent Laid-Open Publication No.Heill-16053, specification of U.S. Patent 5380991, etc., for example, coupons using IC cards are disclosed. "Method and system for using electronic coupon" disclosed in the patent gazette on Japanese Patent Laid-Open Publication No.Heill-16053 consists of a server apparatus on a coupon service provider side, a terminal on a coupon service user side, an IC card for storing coupons (electronic coupons), etc., and selects applicable coupons automatically at the time of purchasing goods and services and uses them. Furthermore, the "Method and system for using electronic coupon" selects applicable coupons for the next purchasing of goods and services and provides them for a coupon service user. With electronic coupons disclosed in the specification of U.S. Patent 5380991, a buying history is recorded on an IC card and a discount rate varies according to the history.

Various kinds of coupons other than those described above are known. They include "Electronic coupon system and electronic coupon issuing and verifying method" disclosed in the patent gazette on Japanese Patent Laid-Open Publication No.Heill-328269, "Portable electronic data coupon" disclosed in a PCT patent gazette on Japanese Patent Publication No.Hei8-509329, and "Real-time goods analysis, individual information providing system, and coupon information providing system" disclosed in a patent gazette on Japanese Patent Laid-Open Publication No.Heill-353555.

Coupons themselves are of great economic value. Coupons therefore can be traded themselves. Trading coupons themselves will lead to active use of coupons, that is to say, to an increase in sales of sellers and providers providing goods and services for which coupons have been issued. However, conventional systems regarding coupons relate to issuing and distributing coupons, the security of coupons, the convenience of coupons at stores, and so on. Coupons themselves are not traded in the conventional systems. In other words, value which coupons themselves have is not noted.

Moreover, the available period is usually set for coupons and coupons are invalid after the expiration of this available period. So even if people have useful coupons, the available period often expires without their knowing it or by missing the opportunity to use them. This means that providers of goods and services who plan to issue coupons in order to increase their sales cannot realize their plans and that coupon users also waste useful coupons.

In addition, such a transaction must be safe and fair.

Moreover, the promotion of the use of an electronic coupon will need an increase in the number of stores which accept it. However, in order to accept it, each store must have information-related equipment installed. This will involve expense. Therefore, small-scale stores etc. may hesitate to install information-related equipment, that is to say, to accept an electronic coupon. In addition, the process and work on the store side must be easy for a store the manager of which is old or an employee of which changes frequently. It is desirable to make the process and work on the store side unnecessary.

Furthermore, in order to trade an electronic coupon or promote the use of an electronic coupon, the safety of transactions must be ensured.

An object of the present invention is to provide an electronic coupon transaction system in which the use of a coupon can be promoted by trading coupons, particularly electronic coupons themselves and, as a result of it, both a provider of goods or services for which a coupon has been issued and a coupon user receive benefits. In other words, an object of the present invention is to create new value of coupons and form a new market in which coupons are traded promptly and actively. In addition, one of the other objects of the present invention is to provide an electronic coupon transaction system in which coupons can be traded safely and fairly and to provide an electronic coupon use supporting system which promotes the use of a coupon by supporting its use and, as a result of it, benefits both a provider of goods or services for which a coupon has been issued and a coupon user.

### SUMMARY OF THE INVENTION

In order to solve the above problems, the present inventors looked at the market value of coupons themselves which is not adequately looked at or considered now, and studied hard to provide a mechanism in which the value of coupons themselves is evaluated adequately. As a result, the present invention was completed. The invention according to claim 1 of the present invention which solved the above problems is an electronic coupon transaction system with a computer for helping to issue and use electronic coupons and at least comprises coupon issuing means for electronically generating the coupon and issuing it to a predetermined person, personal authentication means for performing, in the case of the coupon being used, personal authentication on a person who uses the coupon, and coupon extinguishing means for extinguishing the coupon in the case of the coupon having been used. And the electronic coupon transaction system includes coupon transfer transaction means for enabling a transfer transaction to electronically transfer the coupon from the owner of the coupon to another person.

In this configuration, a coupon is generated and extinguished electronically. A coupon is extinguished, for example, when it has been used. (If the available period is set for a coupon, it is extinguished, for example, after the expiration of the available period.) A coupon is used in the same way with a common electronic coupon. An electronic transfer transaction of this electronically-issued coupon to another person can be performed by the coupon transfer transaction means. A transaction is defined as performing an economical action regarding commerce or other money-making, buying or selling goods or services or delivering the related money or articles, or exchanging what seems to benefit each other. For example, buying or selling coupons or exchanging coupons is a transaction. It does not matter whether a transfer transaction is onerous or not. In the present invention, the type of coupons generated and issued electronically may be network, IC card, open, or closed. Moreover, a coupon in the present invention includes a point because a point can be treated the same as a coupon, for example, in that the purpose of issuing a point is the same as that of issuing a coupon and that a point is out when it is used. A point is generated and issued electronically according to the amount of the shopping done at, for example, a mass sale store of consumer electronics etc. or a supermarket and is accumulated on a magnetic card etc. as electronic information. When a user do the shopping again at the mass sale store etc., for example, he/she can use it the same with cash.

With an onerous transfer transaction, the "coupon transfer transaction means" includes transfer transaction settling means for settling, such as receiving the price of a transfer transaction, as a dispensable requirement of claim 1. In an embodiment of the present invention, a "settling program" will play the role of this transfer transaction settling means. Moreover, if a person who manages an electronic coupon transaction system collects a transaction fee from a person who performs a transfer transaction, the "coupon transfer transaction means" includes transaction fee collecting means for collecting this transaction fee as a dispensable requirement of claim 1. In the embodiment of the present invention, the "settling program" will play the role of this transaction fee collecting means.

"Issuing to a predetermined person" in claim 1 includes issuing to a person who answered an advertisement for an invitation to join in an electronic coupon transaction system inserted in, for example, a newspaper, magazine, or home page on Internet or to a person who answered an advertisement for an invitation to join in an electronic coupon transaction system inserted on, for example, goods, and issuing to a person who answered with an advertising bill for an invitation to join in an electronic coupon transaction system distributed, for example, on the street. In the embodiment of the present invention, coupon generation by the "coupon issuing means" will be performed by writing data to a "coupon information file." In the embodiment of the present invention, coupon issuance by the "coupon issuing means" will be also performed by writing data to a "management table classified by coupon" and "owned coupon table classified by customer." Moreover, in the embodiment of the present invention, the "predetermined person" and "another person" are "customers" and their data will be written to a "customer information file." A "coupon management program" and "customer etc. management program" will write this data.

Next, the electronic coupon transaction system according to claim 2 is the electronic coupon transaction system according to claim 1 which includes a coupon transaction server for holding selling information sent by a seller via a communication medium who intends to sell the coupon and/or buying information sent by a buyer via the communication medium who intends to buy the coupon so that the information can be read via the communication medium.

In this configuration, selling information and/or buying information is held by the coupon transaction server via the communication medium so that it can be read. Therefore, various pieces of information are collected on the coupon transaction server and transfer transactions are performed actively. If a transfer transaction is closed, the coupon will be transferred electronically by the transfer transaction means.

The electronic coupon transaction system according to claim 3 is the electronic coupon transaction system according to claim 1 or 2 which includes intent confirming means for confirming the intent of the seller and an applicant for buying who answers the selling information to perform a transaction and the coupon transfer transaction means of which permits a transfer of the coupon on which the agreement has been obtained and transfers the coupon electronically to the applicant for buying in the case of the intent confirming means judging that there exists an agreement on a transaction.

In this configuration, a transfer transaction of a coupon is performed between a seller who publishes selling information on the coupon transaction server and an applicant for buying who obtains this information. If the intent confirming means for confirming intent to perform a transaction judges that there exists an agreement on a transaction, the coupon is transferred. Therefore, if the intent confirming means does not judge that there exists an agreement on a transaction, then a transfer of the coupon is not permitted. In the embodiment of the present invention described later, the intent confirming means consists of a "seller side agreement button," "buying applicant side agreement button," etc. pasted on a detailed information screen linked to a home page.

The electronic coupon transaction system according to claim 4 is the electronic coupon transaction system according to claim 1 or 2 which includes intent confirming means for confirming the intent of the buyer and an applicant for selling who answers the buying information to perform a transaction and the coupon transfer transaction means of which permits a transfer of the coupon on which the agreement has been obtained and transfers the coupon electronically to the buyer in the case of the intent confirming means judging that there exists an agreement on a transaction.

In this configuration, a transfer transaction of a coupon is performed between a buyer who publishes buying information on the coupon transaction server and an applicant for selling who obtains this information. If the intent confirming means for confirming intent to perform a transaction judges that there exists an agreement on a transaction, the coupon is transferred. Therefore, if the intent confirming means does not judge that there exists an agreement on a transaction, then a transfer of the coupon is not permitted. In the embodiment of the present invention described later, the intent confirming means consists of a "buyer side agreement button," "selling applicant side agreement button," etc. pasted on a detailed information screen linked to a home page.

The electronic coupon transaction system according to claim 5 is the electronic coupon transaction system according to claim 2 or 3 which includes coupon use prohibiting means for prohibiting the use of the coupon in the case of selling information on the coupon being sent.

In this configuration, if selling information on a coupon is sent to the coupon transaction server, the use of the coupon is prohibited in order to avoid transactional trouble. "If selling information is sent" in claim 5 includes a case where the coupon transaction server (central equipment in the embodiment of the present invention) receives the information and a case where the information is published on the coupon transaction server. "Prohibiting the use of a coupon" means prohibiting the use of a coupon for, for example, shopping, but prohibiting a transfer of a coupon to a person other than an applicant for buying who answered selling information published on the coupon transaction server etc. may be added as a prohibited item. The prohibition of the use of a coupon will be dropped, for example, when the transfer transaction was closed and the coupon has been transferred, when the seller gave up selling the coupon, or when the seller chose to use it himself on second thoughts. In the embodiment of the present invention, for example, the prohibition of the use of a coupon will be dropped when the transfer transaction was completed and the settlement has been performed, when the negotiation period has expired, when the seller pushed a "selling cancel button" pasted on a detailed information screen, etc.

The electronic coupon transaction system according to claim 6 is the electronic coupon transaction system according to any of claims 1 to 5 which includes available period information notifying means for notifying the owner of the coupon of available period information at the predetermined time before the expiration of the available period of this coupon in the case of the available period being set for the coupon.

Many coupons are not used because of the expiration of the available period. This will be disadvantageous both to a person who provides (issues) a coupon and to a person (the owner of a coupon) to whom a coupon is provided (issued). With this configuration, therefore, the number of cases where the available period of a coupon has expired can be reduced significantly.

The electronic coupon transaction system according to claim 7 is the electronic coupon transaction system according to any of claims 1 to 6 which includes coupon buying means for electronically transferring the coupon to the electronic coupon transaction system by notifying the owner of the coupon of buying information to the effect of buying the coupon and getting agreement from the owner of the coupon.

Sometimes persons to whom coupons are issued cannot use them. With this configuration, the electronic coupon transaction system (a middle business entity in the embodiment of the present invention) buys these coupons. This is convenient to the owner of a coupon. This notification of buying a coupon should be made together with the notification of available period information. By doing so, a waste of notification can be avoided.

The electronic coupon transaction system according to claim 8 is the electronic coupon transaction system according to any of claims 1 to 7 the coupon issuing means of which issues the coupon at a coupon issue command from a goods provider who provides goods and/or services for which the coupon has been issued.

It is well known that the sale of goods etc. depends on how to issue (provide) a coupon, so how to issue a coupon is meaningful to a goods provider in terms of a business strategy. With this configuration, a coupon can be issued promptly based on a coupon issue command. This will shorten a time-lag between the planning of coupon issuance and the coupon issuance and enable strategic application of a coupon. It must be understood that "goods" in the present invention (specification) include services. Selling goods therefore includes providing services.

The electronic coupon transaction system according to claim 9 is the electronic coupon transaction system according to any of claims 1 to 8 which includes questionnaire sending and receiving means for sending a questionnaire made up in advance to a predetermined person and receiving the results of the questionnaire.

A questionnaire (market research) is meaningful for goods (service) development. This configuration therefore enables a prompt questionnaire and prompt goods development corresponding to a recent tendency of the life cycle of goods etc. to become short. In this configuration, a coupon should be issued as incentive to a person who answers a questionnaire (sends the results of a questionnaire) in order to increase its reliability.

The electronic coupon transaction system according to claim 10 is the electronic coupon transaction system according to any of claims 1 to 9 which includes another system communicating means for communicating with another coupon system using an electronic coupon, owned coupon information obtaining means for obtaining owned coupon information in the another coupon system regarding a customer who has registered himself/herself with the another coupon system, transfer transaction object notifying means for notifying the another coupon system of the coupon having become an object of a transfer transaction in the case of the another coupon becoming an object of a transfer transaction in the electronic coupon transaction system, and transfer transaction result notifying means for notifying of the result of the transfer transaction.

As stated above, mass sale stores of consumer electronics, supermarkets, etc. issue a point according to the amount of shopping and make a discount at the time of the second shopping. The configuration of claim 10 makes a point in this different coupon system an object of a transaction.

In each of the configurations of the first aspect described above, if the available period is set for a coupon and a transfer of the coupon is conditioned on settlement, such as the receipt of the price, it is preferable to perform the settlement quickly. From this viewpoint, it is preferable to use, for example, the settling method of automatically transferring the price to or automatically deducting the price from an account at a financial institution, as in the embodiment of the present invention, or a settling method with a credit card used for a transaction on Internet.

"Coupon transfer transaction means" in the embodiment of the present invention includes a "management table classified by coupon" and "owned coupon table classified by customer" for storing coupon owners, i.e. coupon owner storing means, and a "coupon management program" for rewriting information stored in the coupon owner storing means to change coupon owners, i.e. owner changing means. By the way, if the owner of a coupon is unrevealed, the "coupon transfer transaction means" consists of, for example, a coupon storing medium owned by a coupon owner for electronically storing a coupon and inter-medium coupon transfer means for electronically transferring a coupon stored in the coupon storing medium to a coupon storing medium owned by another person, etc. These coupon storing media are IC cards, hard disks, or the like. The inter-medium coupon transfer means consists of IC card reader-writers, transmission lines for connecting coupon storing media, control means for synthetically controlling transfer transactions, etc. And/or the inter-medium coupon transfer means consists of personal computers or personal data assistants (PDAs), transmission lines for connecting them, control means for synthetically controlling transfer transactions, etc.

Many of the now young people etc. carry information-related equipment, such as a cellular telephone, and master it nicely. The present inventors noticed this, studied hard to provide a mechanism which promotes the use of an electronic coupon, and made the present invention.

That is to say, the invention according to claim 11 (second aspect) of the present invention which solved the above problems is a computer-based electronic coupon use supporting system for supporting the use of an electronic coupon and includes at least coupon issuing means for electronically generating the coupon and issuing the coupon to a predetermined person and coupon extinguishing means for extinguishing the coupon in the case of the coupon having been used. The electronic coupon use supporting system comprises personal authentication means for performing personal authentication in response to a request for personal authentication sent via communication means from the portable remote terminal of a customer who owns the coupon, personal authentication result information sending means for sending the result of the personal authentication as information being able to be displayed on the screen of the portable remote terminal, and coupon use permitting means for permitting a customer who bought goods to use the coupon in the case of the personal authentication having been performed and a goods selling certificate for certifying that the goods for which the coupon had been issued were sold to the customer having been sent from a store terminal installed in a store at which the coupon is used.

In this configuration, personal authentication is performed with the portable remote terminal of a customer who owns a coupon (a customer who does the shopping). This personal authentication is performed for an electronic coupon use supporting system. The result of personal authentication is displayed on the screen of a portable remote terminal. Personal authentication on the store side is also performed by a customer showing the displayed result to, for example, a store clerk. A goods selling certificate (goods selling certifying information) is information which can certify that goods were sold to a customer, and consists of a goods code, a number unique to a store, a number unique to a shopping district, etc. sent (input and sent) from a store terminal (the contents of a goods selling certificate can be set properly in compliance with an arrangement between an electronic coupon use supporting system and a store). A goods selling certificate in an embodiment of the present invention described later consists of a customer number and a coupon code input and sent from a store terminal. Commodity selling certifying information is sent from a store terminal and therefore is reliable.

It is assumed that information regarding the result of personal authentication displayed on the screen of a portable remote terminal is false. This means that personal authentication is not performed and unfairness will be eliminated by the coupon use permitting means. This personal authentication may be performed at a place other than a store.

In this configuration, the result of personal authentication is displayed on a portable remote terminal, such as a cellular telephone, owned by a customer. This enables to do the shopping based on personal authentication without an IC card or magnetic card. In other words, there is no need to install equipment for performing personal authentication, such as an IC card reader or magnetic card reader, in a store, which will reduce the burden on the store side. Moreover, in this configuration, a portable remote terminal functions as an IC card etc. Therefore, as compared with performing personal authentication with an IC card etc., this configuration is convenient to a customer (many people think it troublesome to have a lot of cards). Furthermore, if a portable remote terminal which will be more widespread in future is taken into consideration, this configuration is more convenient to a customer.

Privilege based on a coupon (discount, for example) may be received then and there or, for example, the amount corresponding to a discount may be transferred to a bank account another day.

The electronic coupon use supporting system according to claim 12 is the electronic coupon use supporting system according to claim 11 which includes supporting means for sending the goods selling certificate to be sent from the store terminal as information being able to be displayed on the screen of the portable remote terminal.

In this configuration, the contents of a goods selling certificate to be sent from a store terminal are displayed on the screen of a customer's portable remote terminal, which enables reliable input to or reliable verification of the goods selling certificate. The burden on a store clerk will reduce, of course.

As stated above, many young people carry information-related equipment, such as a cellular telephone, and master it nicely. The present inventors noticed such a fact, studied hard to provide a mechanism which promotes the use of an electronic coupon, and made the present invention.

That is to say, the invention according to claim 13 (third aspect) of the present invention which solved the above problems is a computer-based electronic coupon use supporting system for supporting the use of an electronic coupon and at least includes coupon issuing means for electronically generating the coupon and issuing the coupon to a predetermined person and coupon extinguishing means for extinguishing the coupon in the case of the coupon having been used. The electronic coupon use supporting system comprises personal authentication means for performing personal authentication in response to a request for personal authentication sent via communication means from a customer terminal owned by a customer who owns the coupon and coupon use permitting means for permitting a customer who bought goods to use the coupon in the case of the personal authentication having been performed and a goods buying certificate for certifying that the goods for which the coupon had been issued were bought having been sent from the customer terminal.

In this configuration, too, personal authentication is performed with a customer terminal owned by a customer who owns a coupon (a customer who does the shopping). The personal authentication is performed for an electronic coupon use supporting system also. A goods buying certificate (goods buying certifying information) is information which can certify that goods in a store were bought by a customer, and consists of a goods number, a store number, a telephone number, etc. on, for example, a receipt printed out from a cash register in the store (the contents of a goods buying certificate can be set properly in compliance with an arrangement between an electronic coupon use supporting system and a store). Alternatively, a goods buying certificate consists of a password etc. passed or told by a store (shopping district, for example) when a customer buys goods (the contents of a goods buying certificate can be set properly in compliance with an arrangement between an electronic coupon use supporting system and a store). A place where personal authentication is performed or a place where goods buying certifying information is sent is not limited to a store.

In this configuration, as with the second aspect of the present invention described above, there is no need to install equipment for performing personal authentication, such as an IC card reader, in a store, which will reduce the burden on the store side. Moreover, as compared with the second aspect, there is no need to send data from a store to an electronic coupon use supporting system. This means that even if information-related equipment is not installed in a store, an electronic coupon can be used. Furthermore, in this configuration, a customer terminal functions as an IC card etc. Therefore, as compared with performing personal authentication with an IC card etc., this configuration is convenient to a customer (many people think it troublesome to have a lot of cards). In addition, if personal information equipment and the like which will be more widespread in future is taken into consideration, this configuration is more convenient to a customer.

Privilege based on a coupon (discount, for example) may be received then and there or, for example, the amount corresponding to a discount may be transferred to a bank account another day.

The electronic coupon use supporting system according to claim 14 is the electronic coupon use supporting system according to claim 13 the customer terminal of which is a portable remote terminal and which includes personal authentication result information sending means for sending the result of the personal authentication as information being able to be displayed on the screen of the portable remote terminal and coupon use permitting information sending means for sending permitting information given by the coupon use permitting means as information being able to be displayed on the screen of the portable remote terminal.

In this configuration, a customer terminal is a portable remote terminal, such as a cellular telephone, and personal authentication is performed with it. The result of personal authentication is displayed on the screen of a portable remote terminal. Personal authentication on the store side is also performed by a customer showing the displayed result to, for example, a store clerk. In this configuration, permitting information given by the coupon use permitting means is also displayed on the screen of a portable remote terminal. If a customer shows it to a store clerk, he/she will, for example, enjoy privilege based on a coupon (discount service, for example) then and there.

The coupon, coupon issuing means, coupon extinguishing means, etc. in the second and third aspects of the present invention are the same as those in the first aspect of the present invention.

### BRIEF DESCRIPTION OF THE DRAWINGS

Fig. 1A is a block diagram of a section concerning the issuance and use of a coupon in an embodiment of an electronic coupon transaction system according to the first aspect of the present invention and Fig. 1B is a table showing data and the like sent and received there.

Fig. 2 is a block diagram of the main computer shown in Fig. 1.

Fig. 3 is a block diagram of the WWW server shown in Fig. 1.

Fig. 4 is a view showing the logical structure of a coupon information file.

Fig. 5 is a view showing the logical structure of a management table classified by coupon.

Fig. 6 is a view showing the logical structure of a customer information file.

Fig. 7 is a view showing the logical structure of an owned coupon table classified by customer.

Fig. 8 is a view showing the logical structure of a goods buying history table classified by customer.

Fig. 9 is a flow chart for describing operations performed in the case of a customer in an electronic coupon transaction system of this embodiment buying goods at a store.

Fig. 10A is a block diagram of a section concerning a transfer transaction of a coupon in an electronic coupon transaction system of this embodiment, and Fig. 10B is a table showing data and the like sent and received there.

Fig. 11 is a view showing the structure of a coupon selling board displayed on a home page.

Fig. 12 is a view showing the structure of a detailed information screen linked to Fig. 11.

Fig. 13 is a flow chart in the case of publishing selling information on a coupon selling board.

Fig. 14 is a flow chart showing the whole of a transfer transaction of a coupon with a coupon selling board.

Fig. 15 is a block diagram of a section concerning a transfer transaction of a coupon of the first modification.

Fig. 16 is a view showing the structure of a coupon buying board displayed on a home page in the first modification.

Fig. 17 is a view showing the structure of a detailed information screen linked to Fig. 16.

Fig. 18 is a flow chart showing the whole of a transfer transaction of a coupon with a coupon buying board.

Fig. 19 is a block diagram of a section concerning a transfer transaction of a coupon of the second modification.

Fig. 20A is a block diagram of a section concerning the issuance and use of a coupon (point) in an electronic coupon transaction system of the third modification, and Fig. 20B is a table showing data and the like sent and received there.

Fig. 21 is a view showing the logical structure of a point file for store at a store which adopts the point system shown in Fig. 20.

Fig. 22 is a flow chart for describing the operations of central equipment and a store terminal in the case of the customer shown in Fig. 20 doing the shopping.

Fig. 23 is a block diagram of an electronic coupon use supporting system according to the second aspect of the present invention.

Fig. 24 is a view in which examples of screens displayed in the case of personal authentication being performed in Fig. 23 are arranged on a time series basis. Fig. 24A, 24B, 24C, 24D and 24E show TOP screen, a menu selection screen, a personal authentication entry screen, a personal authentication result screen (when a customer is authenticated), and a personal authentication result screen (when a customer is not authenticated) respectively.

Fig. 25 is a view showing the logical structure of a customer information file in the electronic coupon use supporting system shown in Fig. 23 (modification of Fig. 6).

Fig. 26 a view showing the logical structure of an owned coupon table classified by customer in the electronic coupon use supporting system shown in Fig. 23 (modification of Fig. 7).

Fig. 27 is a block diagram of an electronic coupon use supporting system according to the third aspect of the present invention.

### DESCRIPTION OF THE PREFERRED EMBODIMENTS

Embodiments of an electronic coupon transaction system and electronic coupon use supporting system according to the present invention will be described below in detail with reference to the drawings.

### «Electronic coupon transaction system»

An embodiments of an electronic coupon transaction system according to the first aspect of the present invention will now be described in detail with reference to the drawings.

Unlike a traditional coupon, a coupon in this embodiment is not issued by each company or store. In this embodiment, a requester, such as a company or store, who issues a coupon requests a middle business entity which manages an electronic coupon transaction system to issue a coupon, and the middle business entity issues the coupon electronically to a predetermined person (customer) at this request. In other words, a coupon is issued synthetically.

A middle business entity therefore has functions, such as (1) issuing a coupon to a customer at the request of a requester, (2) supporting the use of a coupon by providing necessary data in the case of a customer using a coupon at a store, (3) opening, so to speak, a coupon trading market where a customer can perform a transaction for transferring a coupon (coupon "transfer transaction"), or (4) doing market research concerning a customer at the request of a requester and reporting its results to the requester.

An electronic coupon in this embodiment is a coupon of closed type which is generated, transferred, and extinguished in a main computer at a middle business entity described later.

### «Issuance and use of coupon»

First, the configuration of a section concerning the issuance and use of a coupon will be described below.

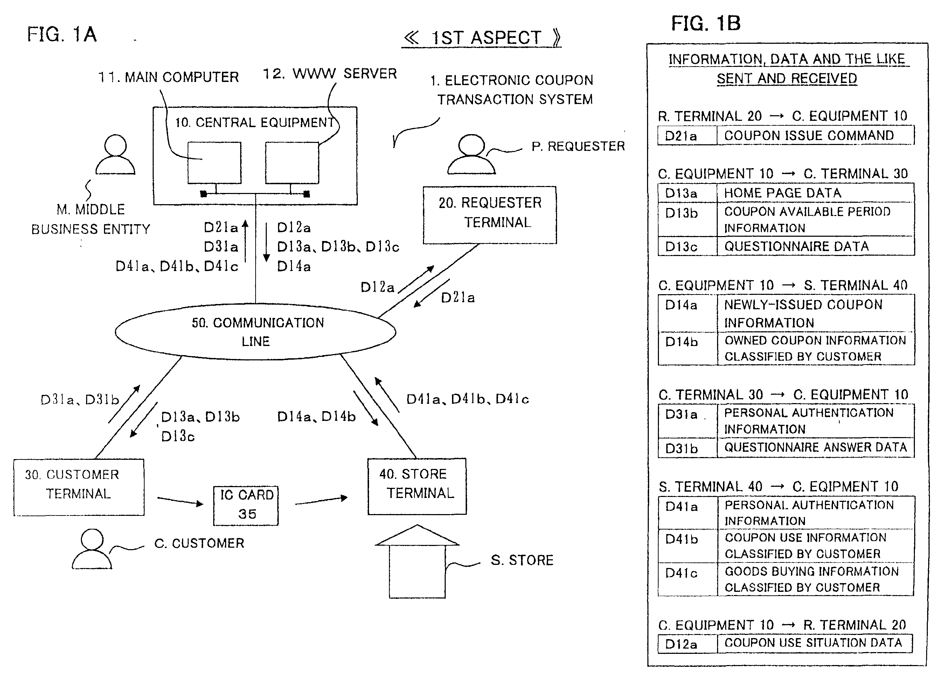

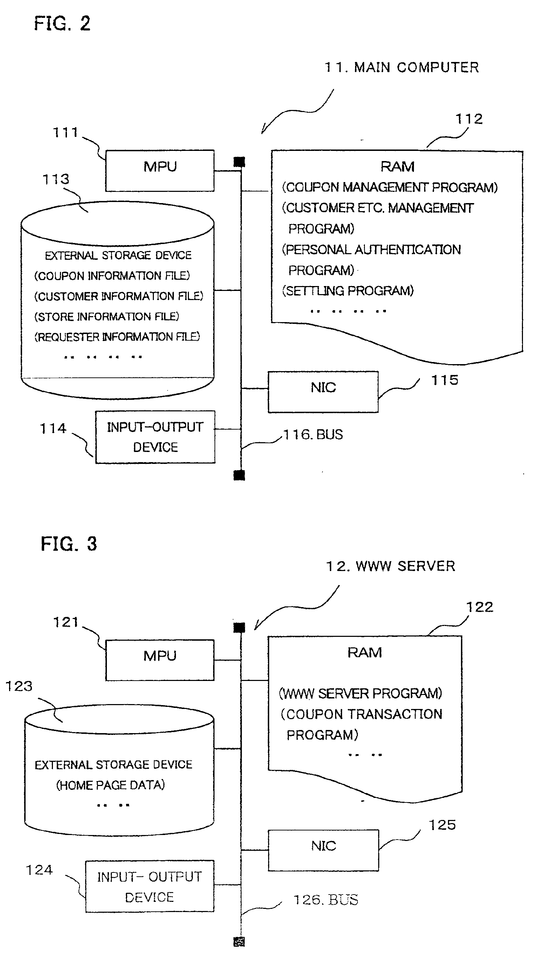

Fig. 1 is a block diagram of a section concerning the issuance and use of a coupon in an electronic coupon transaction system and a table showing data and the like sent and received there. Fig. 2 is a block diagram of the main computer in Fig. 1. Fig. 3 is a block diagram of the WWW server in Fig. 1.

### (Entire configuration)

As shown in Fig. 1, the section concerning the issuance and use of a coupon in the electronic coupon transaction system 1 of this embodiment comprises central equipment 10 (consisting of a main computer 11 and a WWW server 12) managed by middle business entity M, a requester terminal 20 managed by requester P, a customer terminal 30 owned by customer C, an IC card 35 carried by customer C, a store terminal 40 installed in store S, and a communication line 50.

The central equipment 10, requester terminal 20, customer terminal 30, and store terminal 40 are connected to the communication line 50. The number of requester P and the requester terminal 20, customer C and the customer terminal 30, the IC card 35, and store S and the store terminal 40 shown in Fig. 1 is only one respectively. But in reality the number of them is more than one respectively.

The central equipment 10 managed by middle business entity M is configured with the main computer 11 and WWW server 12 LAN(Local Area Network)-connected. The central equipment 10 and the communication line 50 are connected via a communication server (not shown). A configuration in which the main computer 11 also function as the WWW server 12 or a configuration in which the WWW server 12 also function as the main computer 11 may be used.

In the main computer 11, as shown in Fig. 2, MPU (Micro Processing Unit) 111, RAM (Random Access Memory) 112, an external storage device 113, an input-output device 114, NIC (Network Interface Card) 115, etc. are connected to a bus 116. MPU 111 processes various operations and controls the main computer 11 synthetically. On RAM 112, various programs, such as a coupon management program, customer etc. management program, personal authentication program, and settlement program, have started. The external storage device 113 stores various data, such as a coupon information file and customer information file, and various programs. A keyboard, mouse, etc. are connected to the input-output device 114 via an I/O device. NIC 115 is a LAN connection board for LAN connection.

As stated above, a coupon in the electronic coupon transaction system 1 of this embodiment is a coupon of closed type. The main computer 11 therefore has the function of unitarily managing the issuance of a coupon, the use of a coupon at store S, the extinguishment of a coupon, etc. The above coupon management program fulfills this function of unitarily managing a coupon. The coupon management program also has the function of transferring a coupon in a transfer transaction of a coupon described later. The customer etc. management program manages customer C, requester P, etc. The personal authentication program performs personal authentication in the case of, for example, a coupon being used. The settlement program performs settlement, such as receiving the price in the case of a transfer transaction of a coupon being conducted.

In the WWW server 12, as shown in Fig. 3, MPU 121, RAM 122, an external storage device 123, an input-output device 124, NIC 125, etc. are connected to a bus 126. MPU 121 processes various operations and controls the WWW server 12 synthetically. On RAM 122, various programs, such as a WWW server program and coupon transaction program, have started. The external storage device 123 stores various data, such as a home page file, and various programs. A keyboard, mouse, etc. are connected to the input-output device 124 via an I/O device.

The WWW server program is software corresponding to a communication base for communicating on HTTP (Hyper Text Transfer Protocol). HTTP is a protocol for obtaining information on WWW (World Wide Web) and enables mutual communication between servers connected to Internet with HTML (Hyper Text Markup Language) or between a server and a client connected to Internet with HTML. The WWW server 12 enables to read information (home page file, for example) stored in the WWW server 12 from the outside via the communication line 50 (Internet). For example, information about the type, number, and available period of a person's own coupon and information about a newly-issued coupon can be read.

In this embodiment, a transfer transaction of a coupon is performed with the above coupon transaction program. A transfer transaction of a coupon will be described later.

The requester terminal 20 is, for example, a personal computer (PC) managed by requester P who requests to issue a coupon, and has a configuration in which MPU, RAM, an external storage device, an input-output device, DSU (Digital Service Unit), etc. (not shown) are connected to a bus. This configuration of the requester terminal 20 is the same as that of the main computer 11 etc. described above. Its descriptions therefore is omitted. DSU is an electronic data transmitter receiver installed at the user end of a digital line, such as ISDN. With DSU, the requester terminal 20 can be connected to the central equipment 10 via the communication line 50 (direct communication line). The main function of the requester terminal 20 is to send coupon issue command D21a to the central equipment 10. This will be described later. Requester P is, for example, a maker, department store, travel agency, convenience store, lunch chain store, agent of goods relating to finance, or person who runs a virtual store on Internet, and issues via middle business entity M a coupon used for goods or services which it, for example, manufactures, provides, or deals in. The word "goods" given below includes "services."

The customer terminal 30 is a PC which the person of customer C to whom a coupon is issued owns in, for example, his/her home. The customer terminal 30 also has a configuration in which MPU, RAM, an external storage device, an input-output device, DSU, etc. are connected to a bus. A WWW browser program is installed on the customer terminal 30 in order to read various pieces of information which the WWW server 12 holds in a readable state. The WWW browser program enables to read a home page file held by the WWW server 12 and to send various pieces of information to the WWW server 12. With the customer terminal 30, customer C can check the type, number, and available period of his/her own coupons, obtain information about newly-issued coupons, answer market research, and perform transfer transactions of coupons described later. In this embodiment, the customer terminal 30 is connected to Internet via the WWW server 12 and the communication line 50.

Customer C is acknowledged as a regular customer by registering himself as a member with middle business entity M and his/her data is registered with the main computer 11. This enables customer C to have coupons issued, use coupons at store S, and perform transfer transactions of coupons with another customer C.

The IC card 35 is made by sealing a semiconductor chip (integrated circuit) on a plastic card of credit card size and is carried by customer C. The IC card 35 includes a memory for storing customer information etc., a data control circuit for transferring data, processing cipher, etc., and a communication section for performing data communication with an IC card reader (these are not shown). As described later, customer C can receive services provided by the electronic coupon transaction system 1 by performing personal authentication with the IC card 35 in the case of doing the shopping at store S. Personal authentication is a method for preventing a person other than customer C from unfairly using the electronic coupon transaction system 1 by pretending to be customer C. The IC card 35 is distributed to customer C by middle business entity M if customer C registers himself as a member with middle business entity M.

The store terminal 40 is a computer installed in store S, such as a convenience store. The store terminal 40 and POS (Point Of Sales) registers are united into a system. The store terminal 40 has a configuration as a common computer and includes a bar-code reader for reading bar codes on goods and an IC card reader for reading information on the IC card 35 which customer C carries. The store terminal 40 contains a coupon information file for store in order to judge whether or not a coupon is issued for goods bought. This will be described later. Store S also includes a virtual store on Internet etc.

The communication line 50 is Internet or a direct communication line. In this embodiment, the communication line 50, being a direct communication line, connects the central equipment 10 (main computer 11) and the requester terminal 20, and the central equipment 10 (main computer 11) and the store terminal 40. On the other hand, the communication line 50, being Internet, connects the central equipment 10 (WWW server 12) and the customer terminal 30.

### (Files, tables, and the like)

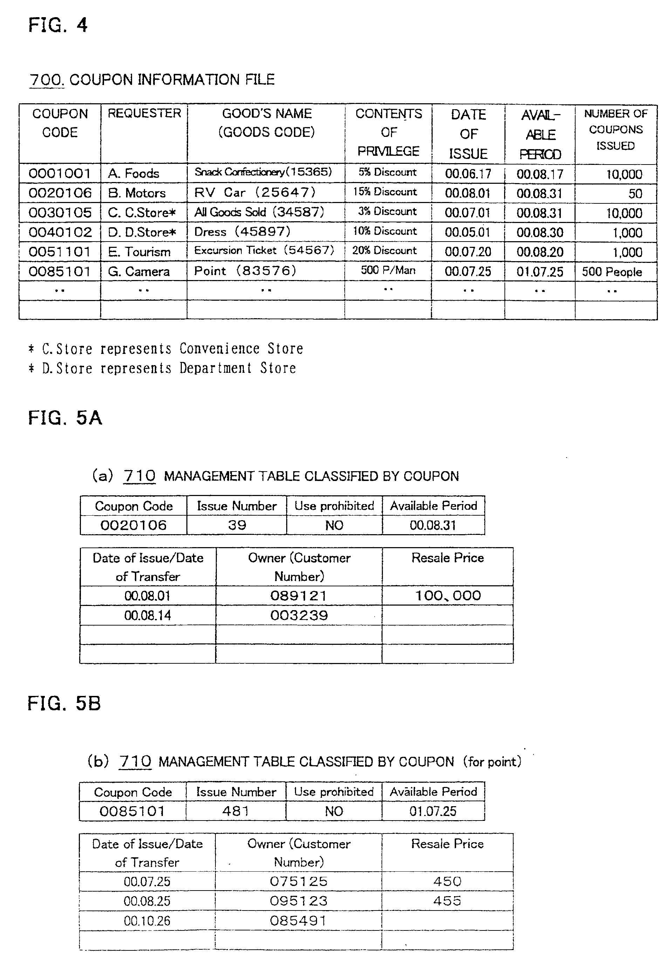

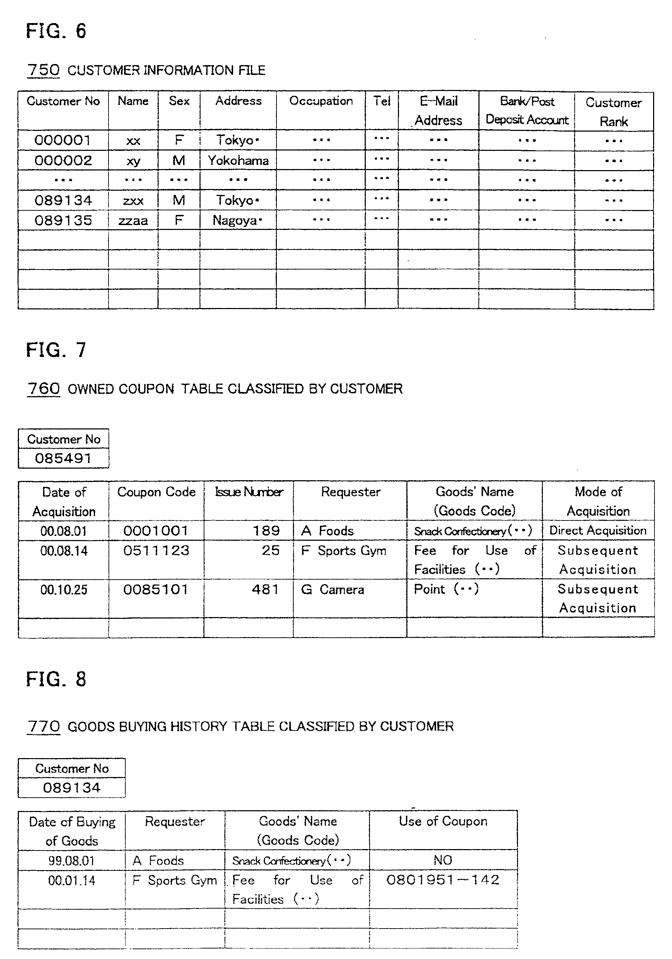

Next, the main files, tables, and the like used in the section concerning the issuance and use of a coupon will be described by reference to Figs. 4 through 8. Fig. 4 is a view showing a logical structure of a coupon information file. Fig. 5 is a view showing a logical structure of a management table classified by coupon. Fig. 6 is a view showing a logical structure of a customer information file. Fig. 7 is a view showing a logical structure of an owned coupon table classified by customer. Fig. 8 is a view showing a logical structure of a goods buying history table classified by customer.

As shown in Fig. 4, a coupon information file 700 consists of items (coupon information), such as Coupon Code 701, Requester 702, Goods' Name (Goods code) 703, Contents of Privilege 704, Date of Issue 705, Available Period 706, and Number of Coupons Issued 707. The number of these items can be increased or decreased at need. Coupon Code 701 consists of a unique number, that is to say, this number varies with the kind of a coupon. And Goods' Name (Goods code) 703 includes a unique goods code, that is to say, this code varies with the kind of goods. In this embodiment, the coupon information file 700 is stored in the external storage device 113 of the main computer 11. The electronic coupon transaction system 1 performs the basic management of coupons with the coupon information file 700. In the coupon information file 700, the sixth record (one horizontal row) from the top shows that points which can be used for all the goods sold at G Camera, being a mass retailer, were distributed to five hundred persons (500 points per person) at the request of G Camera. A person who owns 500 points can make a purchase of 500 yen.

A coupon is generated by writing coupon information to the coupon information file 700 and is extinguished by removing coupon information from the coupon information file 700. A coupon is generated when the main computer 11 receives coupon issue command D21a from the requester terminal 20. A coupon is generated or extinguished by a coupon management program which has started on the main computer 11.

As shown in Fig. 5A and 5B, a management table classified by coupon 710 consist of items, such as Coupon Code 711, Issue Number 712, Use Prohibited 713, Available Period 714, Date of Issue/Date of Transfer 715, Owner (Customer Number) 716, and Resale Price 717. The number of these items can be increased or decreased at need. Issue Number 712 is an item necessary to manage all coupons issued and serves as a serial number. Issue Number 712 and Coupon Code 711 make a coupon unique. As described later, Use Prohibited 713, Date of Issue/Date of Transfer 715, and Owner (Customer Number) 716 are items necessary to perform a transfer transaction of a coupon. Resale Price 717 is a benefit ( including a fee for a transfer transaction) reaped by the previous owner (customer C who resold the coupon) from the transfer. In other words, it is a cost which customer C, being a new owner, paid to obtain the coupon. With the management table classified by coupon 710, the electronic coupon transaction system 1 manages, for example, the current owner, or customer C, of a coupon transferred from hand to hand after issuance.

The management table classified by coupon 710 of Fig. 5A shows that a coupon (15 % discount on RV vehicles) with the available period of thirty days was issued to customer C with the customer number of 089121 on August 1 and that the coupon was transferred from customer C in question to customer C with the customer number of 003239 at the resale price of 100,000 yen on August 14.

The management table classified by coupon 710 of Fig. 5B shows that a coupon (500 points per person) with the available period of one year was issued to customer C with the customer number of 075125 on July 25, that the coupon was transferred from customer C in question to customer C with the customer number of 095123 at the resale price of 450 yen on August 25, and that the coupon was transferred from customer C with the customer number of 095123 to customer C with the customer number of 085491 at the resale price of 455 yen on October 26.

The management table classified by coupon 710 is created in the external storage device 113 of the main computer 11 by a coupon management program. Creating the management table classified by coupon 710 means distributing (issuing) a coupon to customer C. For example, when the available period of a coupon has expired or when a coupon is used at store S, that is to say, when a coupon to be managed is extinguished, the corresponding management table classified by coupon 710 is removed by the coupon management program.

Once a coupon is used, it lapses. This is the same with a point. That is to say, with Fig. 5B as an example, customer C with the customer number of 085491 owns 500 points, by which he/she can make a purchase of 500 yen. If he/she makes a purchase of 400 yen, all his/her points lapse (the management table classified by coupon 710 for these points lapses). 100 points do not remain.

As shown in Fig. 6, a customer information file 750 consists of items (customer information), such as Customer Number 751, Name 752, Sex 753, Address 754, Occupation 755, Telephone 756, E-mail Address 757, Bank or Post Deposit Account 758, and Customer Rank 759. The number of these items can be increased or decreased at need. The customer information file 750 is created in the external storage device 113 of the main computer 11. When new customer C registered as a member, when the registration of customer C as a member was revoked, when Address 754 etc. were changed, or when Customer Rank 759 was changed, for example, a customer management program which has started on the main computer 11 will write or update customer information

As shown in Fig. 7, an owned coupon table classified by customer 760 consists of items, such as Customer Number 761, Date of Acquisition 762, Coupon Code 763, Issue Number 764, Requester 765, Goods' Name (Goods Code) 766, and Mode of Acquisition 767. The number of these items can be increased or decreased at need. The owned coupon table classified by customer 760 is created in the external storage device 113 of the main computer 11. The owned coupon table classified by customer 760 is created when customer C registers as a member. When a coupon is issued (direct acquisition) or transferred to customer C in question, data about the coupon issued or transferred is written. Moreover, when a coupon is used at store S or when a coupon is transferred to another customer C, data about the coupon used or transferred is removed.

As shown in Fig. 8, a goods buying history table classified by customer 770 consists of the items of Customer Number 771, Date of Buying of Goods 772, Requester 773, Goods' Name (Goods Code) 774, and Use of Coupon 775. The number of these items can be increased or decreased at need. The goods buying history table classified by customer 770 is created in the external storage device 113 of the main computer 11. When customer C buys goods for which coupons have been issued, data is written into the goods buying history table classified by customer 770. Data about whether or not coupons were used actually is also written into it.

Besides the above files, tables, and the like, a coupon information file for store necessary in the case of a coupon being used at store S will be stored in an external storage device (not shown) of the store terminal 40. The coupon information file for store has a logical structure similar to that of the coupon information file shown in Fig. 4 and is used in order to judge, by bar codes on goods read by a bar-code reader of the store terminal 40, whether or not goods bought are ones for which coupons have been issued. The coupon information file for store will be updated when the available period of a coupon has expired or when newly-issued coupon information D14a described later is sent.

### (Information, data, and the like)

Furthermore, the main information, data, and the like sent and received in the section concerning the issuance and use of a coupon will be described by reference to Fig. 1 etc.

Coupon issue command D21a is sent from the requester terminal 20 to the central equipment 10.

Coupon issue command D21a comprises information about a requester, the number of coupons issued, the available period of the coupons, persons to whom the coupons are distributed. The main computer 11 will issue and distribute a predetermined number of predetermined coupons to predetermined customer C on coupon issue command D21a.

Home page data D13a, coupon available period information D13b, and questionnaire data D13c are sent from the central equipment 10 to the customer terminal 30.

Home page data D13a is information about a home page which the WWW server 12 sends in response to an inquiry from the customer terminal 30. Customer C can get information etc. about his/her own coupons from home page data D13a.

Coupon available period information D13b is sent automatically from the WWW server 12 by, for example, E-mail in order to notify customer C that the available period of coupons distributed to customer C in question will soon expire. Coupon available period information D13b consists of data for identifying the coupon the available period of which will soon expire, a document in a fixed form for notifying that the available period will soon expire, and so on.

Questionnaire data D13c is sent when middle business entity M does market research on customer C.

Newly-issued coupon information D14a and owned coupon information classified by customer D14b are sent from the central equipment 10 to the store terminal 40.

Newly-issued coupon information D14a is used to update the above coupon information file for store which the store terminal 40 is equipped with.

Owned coupon information classified by customer D14b is sent in response to an inquiry from the store terminal 40 when the shopping is done with a coupon.

Personal authentication information D31a and questionnaire answer data D31b are sent from the customer terminal 30 to the central equipment 10.

Personal authentication information D31a is used to authenticate a person who are reading a home page, and includes a customer number.

Questionnaire answer data D31b is the answer to questionnaire data D13c described above.

Personal authentication information D41a, coupon use information classified by customer D41b, and goods buying information classified by customer D41c are sent from the store terminal 40 to the central equipment 10.

Personal authentication information D41a is information regarding personal authentication performed when customer C does the shopping with a coupon at store S.

Coupon use information classified by customer D41b is created and sent to the central equipment 10 when customer C does the shopping with a coupon at store S. Coupon use information classified by customer D41b is written into the goods buying history table classified by customer 770 shown in Fig. 8. Coupon use information classified by customer D41b is also used to remove data regarding a used coupon from the owned coupon table classified by customer 760 shown in Fig. 7.

Goods buying information classified by customer D41c is created and sent to the central equipment 10 when customer C does the shopping at store S. Goods buying information classified by customer D41c shows what goods customer C in question bought, and is written into the goods buying history table classified by customer 770 shown in Fig. 8.

Coupon use situation data D12a is sent from the central equipment 10 to the requester terminal 20. Coupon use situation data D12a is data showing coupon use situation by requester P (who of customer C bought what goods at which store S...).

### (Operations)

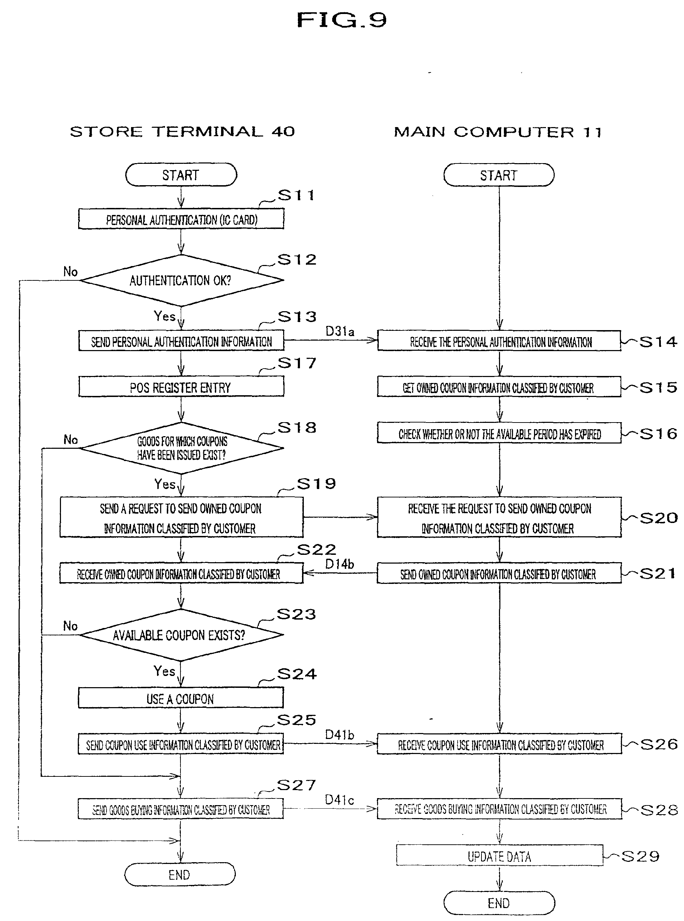

Next, the operations of the section concerning the issuance and use of a coupon will be described by suitable reference to Figs. 1 through 9. Fig. 9 is a flow chart for describing operations performed in the case of a customer buying goods at a store.

First, members are collected by advertising, for example, on Internet or in magazines and the applicants are registered as customer C. The collection of members is performed by middle business entity M and/or requester P. Data regarding customer C in question is written into the customer information file 750 shown in Fig. 6 when he/she is registered as a member. The owned coupon table classified by customer 760 shown in Fig. 7 and goods buying history table classified by customer 770 shown in Fig. 8 are also created. The IC card 35 into which personal information regarding customer C in question (customer number [customer ID], password number) is written is distributed to customer C when he/she is registered as a member.

A coupon is issued to customer C at need. For example, it is issued when customer C registers as a member, when customer C answers a questionnaire, or when customer C frequently buys goods sold by requester P. In the case of customer C registering as a member, a coupon is issued in order to urge him/her to use the electronic coupon transaction system 1. In the case of customer C answering a questionnaire, a coupon is issued in order to ensure the reliability of data by heightening his/her will to answer the questionnaire. Furthermore, In the case of customer C frequently buying goods sold by requester P, a coupon is issued in order to return benefit to a steady customer or treat a steady customer considerately, so to speak. A questionnaire will be performed by sending and receiving questionnaire data D13c and questionnaire answer data D31b (see Fig. 1).

A coupon is issued by writing data regarding the coupon into the coupon information file 700 shown in Fig. 4 (generation of a coupon), creating the management table classified by coupon 710 shown in Fig. 5, and writing data regarding the coupon into the owned coupon table classified by customer 760.

The use of issued coupons at store S will now be described by reference to Fig. 9.

Customer C to whom coupons were issued goes to store S with the IC card 35. When customer C buys goods and pays the price for them, personal authentication is performed with the IC card 35 (S11). Personal authentication is performed by an IC-card reader (not shown), with which the store terminal 40 is equipped, reading the IC card 35 and by customer C entering a password number. If customer C is judged not to be customer C himself/herself as a result of personal authentication (S12), customer C cannot use the coupons. If customer C is judged to be customer C himself/herself, he/she is permitted to use the coupons and personal authentication information D31a is sent to the main computer 11 (central equipment 10) (S13). Between the main computer 11 and the store terminal 40, data is sent and received via the communication line 50 (direct communication line).

When the main computer 11 receives personal authentication information D31a (S14), the main computer 11 searches the external storage device 113 with a customer number included in personal authentication information D31a as a key and reads owned coupon information classified by customer, that is to say, the owned coupon table classified by customer 760 shown in Fig. 7 regarding customer C in question (S15). And then the main computer 11 checks whether or not the available periods of the coupons have expired (S16). In this case, the coupon information file 700 shown in Fig. 4 is searched with Coupon Code 763 described in the owned coupon table classified by customer 760 as a key and Available Period 706 is obtained for each coupon. If there exist coupons the available periods of which have expired, the owned coupon table classified by customer 760, the coupon information file 700 shown in Fig. 4, and the management table classified by coupon 710 shown in Fig. 5 are updated. Moreover, data indicating that the coupons have been extinguished because of the expiration of their available period is recorded and stored by customers.

At store S, on the other hand, POS register entry (entry into the store terminal 40) of each of goods bought by customer C is performed (S17). After the POS register entry, whether or not coupons have been issued for goods in question is judged (S18). In this case, contents described in a coupon information file for store and a bar code (goods code) entered with a POS register are compared. If customer C buys goods for which a coupon has not been issued, a coupon is not used. If there exist goods for which a coupon has been issued, a request to send owned coupon information classified by customer is sent from the store terminal 40 to the main computer 11 (S19).

When the main computer 11 receives the request to send owned coupon information classified by customer, the main computer 11 sends the store terminal 40 owned coupon information classified by customer D14b the main contents of which are Customer Number 761 and Coupon Code 763 of the owned coupon table classified by customer 760, which was obtained in step S15 and the expiration checking of the available period of which was done in step S16 (S20).

When the store terminal 40 receives owned coupon information classified by customer D14b (S21), the store terminal 40 compares a coupon code included in owned coupon information classified by customer D14b and the coupon information file for store and judges that some or none of the coupons owned by customer C can be used for the goods, for which coupons have been issued, bought this time (S23). If there exist available coupons, they are used (S24). When coupons are used, the store terminal 40 creates coupon use information classified by customer D41b and send it to the main computer 11. Coupon use information classified by customer D41b includes a customer number and coupon codes of the coupons used by a customer.

The store terminal 40 also creates goods buying information classified by customer D41c regarding goods bought by customer C and send it to the main computer 11 (S27). Goods buying information classified by customer D41c includes a customer number and codes of goods.

The main computer 11 receives coupon use information classified by customer D41b and goods buying information classified by customer D41c (S26 and S28). And data is updated on the basis of information D41b and D41c (S29). That is to say, the management table classified by coupon 710 shown in Fig. 5 regarding the coupon in question is removed, data in the owned coupon table classified by customer 760 shown in Fig. 7 regarding the coupon in question is removed, and data regarding the shopping in question is written into the goods buying history table classified by customer 770 shown in Fig. 8. If the management table classified by coupon 710 and the data in the owned coupon table classified by customer 760 are removed, the used coupon is extinguished.

In an electronic coupon transaction system of this embodiment, coupons are issued and used in this way.

In the above embodiment, coupons are extinguished when they have been used (using up) or when their available periods have expired. Coupons may be extinguished when a customer revokes his/her registration as a member or when a customer does wrong.

### «Transfer transaction of a coupon»

Next, the configuration of a section concerning a transfer transaction of a coupon will now be described. Elements and devices which are the same as those in the configuration of the section concerning the issuance and use of a coupon have the same signs and their descriptions will be omitted.

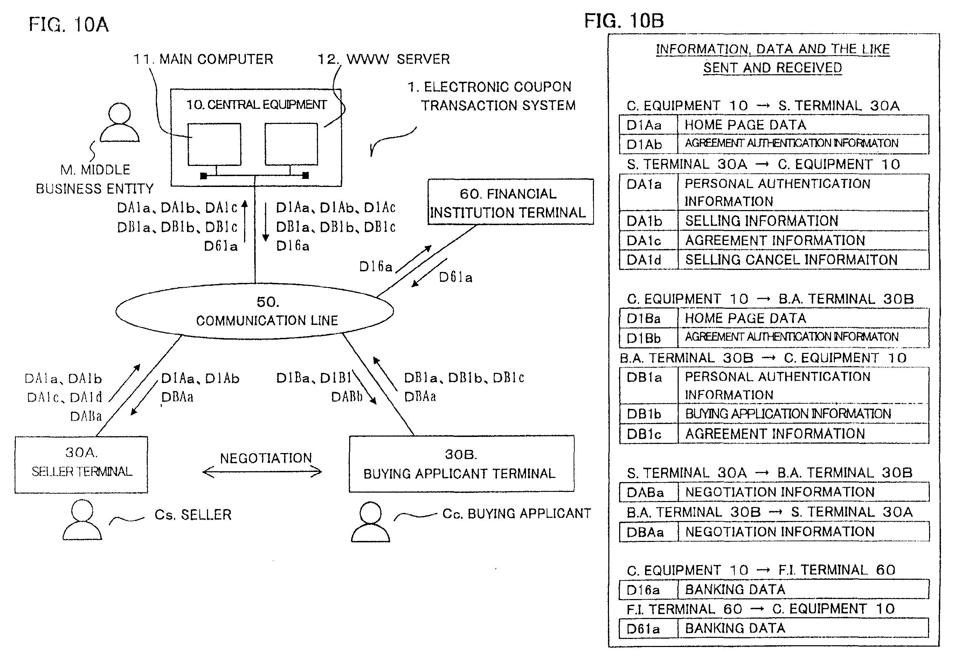

Fig. 10 is a block diagram of a section concerning a transfer transaction of a coupon in an electronic coupon transaction system and a table showing data and the like sent and received there.

In the present invention, transfer transactions of coupons performed in the electronic coupon transaction system 1 will take the form of, for example, buying and selling between customer C and customer C ("C to C," so to speak) or between customer C and middle business entity M ("B to C," so to speak). Cases where coupons are bought and sold between customer C and customer C, especially cases where customer C who owns coupons puts them on sale to another customer C by transmitting (sending) selling information will now be described.

### (Entire configuration)

As shown in Fig. 10, a section concerning a transfer transaction of a coupon in the electronic coupon transaction system 1 of this embodiment comprises the central equipment 10 managed by middle business entity M, a seller terminal 30A owned by seller Cs of customer C, a buying applicant terminal 30B owned by buying applicant Cc of customer C, a financial institution terminal 60, and the communication line 50.

The central equipment 10, the seller terminal 30A, and the buying applicant terminal 30B are connected via the communication line 50 with Internet. The central equipment 10 and the financial institution terminal 60 are connected via the communication line 50, being a direct communication line. The number of seller Cs and the seller terminal 30A and buying applicant Cc and the buying applicant terminal 30B shown in Fig. 10 is only one respectively. But in reality the number of them is more than one respectively. Furthermore, the number of the financial institution terminal 60 can be more than one.

The central equipment 10 is the same as that in the above section concerning the issuance and use of a coupon; therefore, its descriptions will be omitted. A coupon transaction program enabling a transfer transaction of a coupon has started on the WWW server, which stores home page data described later.

The configuration of the seller terminal 30A owned by seller Cs of customer C who resells (performs a transfer transaction of) his/her own coupon and that of the buying applicant terminal 30B owned by buying applicant Cc of customer C who wants to obtain (perform a transfer transaction of) a coupon from another customer C are the same as that of the above customer terminal 30; therefore, their descriptions will be omitted. Both terminals 30 A and 30B can be equipped with an IC-card reader in order to perform personal authentication with the IC card 35 (see Fig. 1).

The financial institution terminal 60 is a terminal installed in a financial institution, such as a post office or a bank. The financial institution terminal 60 is connected to the central equipment 10 via the communication line 50 and can, for example, deduct an amount from buying applicant Cc's savings or post-office account and put it into middle business entity M's savings or post-office account, or transfer from middle business entity M's savings or post-office account to seller Cs's savings or post-office account at a command from the central equipment 10. Such a mechanism for a transfer between accounts, deduction from an account, etc. with a communication line is already known as computer banking etc.

### (Files, tables, and the like)

The main files, tables, and the like used in the section concerning a transfer transaction of a coupon are the same as those used in the above section concerning the issuance and use of a coupon; therefore, its descriptions will be omitted.

### (Information, data, and the like)

Next, the main information, data, and the like sent and received in the section concerning a transfer transaction of a coupon will be described by reference to Fig. 1 etc.

Home page data D1Aa and agreement authentication information D1Ab are sent from the central equipment 10 to the seller terminal 30A.

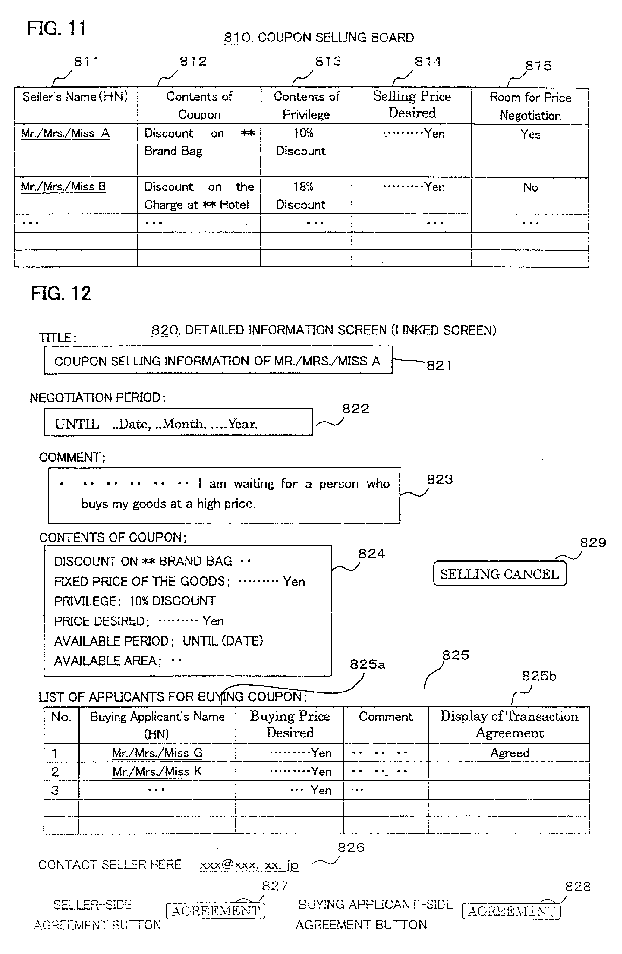

Home page data D1Aa is information regarding a home page sent by the WWW server 12 in response to an inquiry from the seller terminal 30A. A coupon selling board 810 and detailed screen 820 (see Fig. 11) described later and a data form for selling information used in the case of sending selling information DA1b described later are included in home page data D1Aa.

Agreement authentication information D1Ab is sent (by E mail, for example) from the central equipment 10 when seller Cs and buying applicant Cc have reached an agreement on a transfer transaction of a coupon

Personal authentication information DA1a, selling information DA1b, agreement information DA1c, and selling cancel information DA1d are sent from the seller terminal 30A to the central equipment 10.

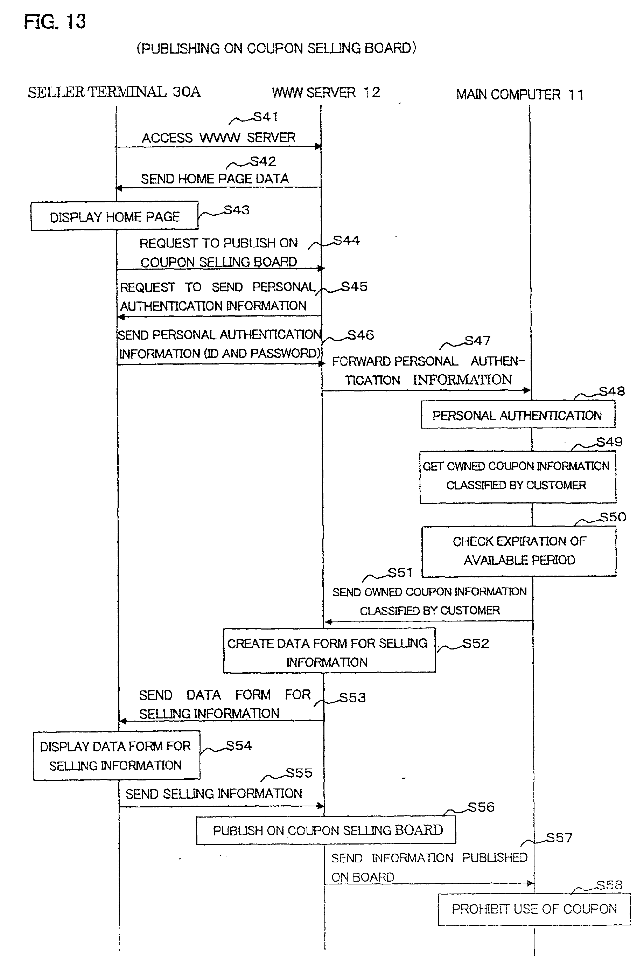

Personal authentication information DA1a is information to obtain personal authentication which is necessary for seller Cs to get the coupon selling board 810 and detailed screen 820 (see Figs. 11 and 12) described later.

With selling information DA1b, data to the effect that seller Cs wants to sell a coupon is published on the coupon selling board 810. Selling information DA1b is created according to the above data form for selling information by seller Cs. On the basis of selling information DA1b, the coupon selling board 810 and detailed information screen 820 (see Fig. 11) described later will be created.

Agreement information DA1c is sent by the operation of seller Cs if he/she is satisfied as to the conditions proposed by buying applicant Cc (see 827 in Fig. 12 described later).

Selling cancel information DA1d is sent by the operation of seller Cs, for example, if he/she gives up selling the coupon (see 829 in Fig. 12 described later). This cancels selling information DA1b.

Home page data D1Ba and agreement authentication information D1Bb are sent from the central equipment 10 to the buying applicant terminal 30B.

Home page data D1Ba is information regarding a home page sent by the WWW server 12 in response to an inquiry from the buying applicant terminal 30B. The coupon selling board 810 and detailed screen 820 (see Fig. 11) and a data form used in the case of sending buying application information DB1b described later are included in home page data D1Ba.

As with agreement authentication information D1Ac described above, agreement authentication information D1Bb is sent from the central equipment 10 when seller Cs and buying applicant Cc have reached an agreement on a transfer transaction of a coupon.

Personal authentication information DB1a, buying application information DB1b, and agreement information DB1c are sent from the buying applicant terminal 30B to the central equipment 10.

Personal authentication information DB1a is information to obtain personal authentication which is necessary for buying applicant Cc to get the coupon selling board 810 and detailed screen 820 (see Fig. 12).

With buying application information DB1b, data to the effect that buying applicant Cc wants to buy a coupon published on the coupon selling board 810 is published. Buying application information DB1b is created according to the above data form by buying applicant Cc. Buying application information DB1b includes buying applicant Cc's customer number, handle name, buying price desired, and comment.

Agreement information DB1c is sent by the operation of buying applicant Cc if he/she is satisfied as to the conditions proposed by seller Cs (see 828 in Fig. 11 described later).

Negotiation information DABa is sent from the seller terminal 30A to the buying applicant terminal 30B. Negotiation information DABa is sent, for example, by E mail in the case of negotiating via the terminals 30 A and 30B. If negotiations are not conducted via the terminals 30 A and 30B, negotiation information DABa is not sent.

Negotiation information DBAa is sent from the buying applicant terminal 30B to the seller terminal 30A. As with negotiation information DABa described above, negotiation information DBAa is sent in the case of negotiating via the terminals 30 A and 30B. If negotiations are not conducted via the terminals 30 A and 30B, negotiation information DBAa is not sent.

Banking data D16a is sent from the central equipment 10 to the financial institution terminal 60. Banking data D16a can be data regarding deducting an amount from buying applicant Cc's savings or post-office account into middle business entity M's savings or post-office account or data regarding transferring an account from middle business entity M's savings or post-office account to seller Cs's savings or post-office account.

Banking data D61a is sent from the financial institution terminal 60 to the central equipment 10. Banking data D61a is the result of banking data D16a.

### (Home page data)

Next, home page data used in the section concerning a transfer transaction of a coupon will be described. Fig. 11 is a view showing the structure of a coupon selling board displayed on a home page. Fig. 12 is a view showing the structure of a detailed information screen linked to Fig. 11. Home page data is displayed on the screens (not shown) of the seller terminal 30A and the buying applicant terminal 30B.

The coupon selling board 810 shown in Fig. 11 is linked to a home page on the WWW server 12. The coupon selling board 810 consists of items, such as Seller's Name (HN) 811, Contents of Coupon 812, Contents of Privilege 813, Selling Price Desired 814, and Room for Price Negotiation 815. The number of these items can be increased or decreased at need. Customer C (seller Cs) who wants to sell his/her own coupon uses the coupon selling board 810 in order to resell (perform a transfer transaction of) the coupon to another customer C (buying applicant Cc).

In this case the contents of Seller's Name (HN) 811 is a handle name, but a customer number may be used instead. If seller Cs has the intention to conduct price negotiations with buying applicant Cc, Room for Price Negotiation 815 is displayed as "Yes." Moreover, Seller's Name (HN) 811 has a link and, therefore, clicking here will display a screen (detailed information screen 820) linked thereto.

The detailed information screen 820 shown in Fig. 12 consists of items, such as Title 821, Negotiation Period 822, Comment 823, Contents of Coupon 824, List of Applicants for Buying Coupon 825, Contact Seller Here 826, Seller-side Agreement Button 827, and Buying Applicant-side Agreement Button 828. List of Applicants for Buying Coupon 825 consists of items, such as Number, Buying Applicant' s Name (HN) 825a, Buying Price Desired, Comment, Display of Transaction Agreement 825b. The number of these items can be increased or decreased at need. The detailed information screen 820 is basically displayed by coupons sold (by cases). The detailed information screen 820 will promote transfer transactions of coupons.

In this case the contents of Buying Applicant's Name (HN) 825a is a handle name, but a customer number may be used instead. Buying applicant Cc's E-mail address is linked to Buying Applicant's Name 825a at the request of buying applicant Cc. As a result, seller Cs can smoothly conduct negotiations with buying applicant Cc. In addition, if Room for Price Negotiation 815 on the coupon selling board 810 is set to "Yes" and seller Cs is open to negotiations with buying applicant Cc, his/her E-mail address is displayed in Contact Seller Here 826. Buying applicant Cc therefore can smoothly conduct negotiations with seller Cs. Seller Cs and buying applicant Cc can negotiate by various methods, such as E-mail, telephone, mail, or a personal interview. Negotiation Period 822 sets a time limit for negotiation.

When agreement is obtained after negotiations, seller Cs clicks Seller-side Agreement Button 827 as evidence of the agreement. Clicking will create agreement information DA1c and send it to the central equipment 10. When clicking Seller-side Agreement Button 827 is accepted, personal authentication is needed (clicking Seller-side Agreement Button 827 will display an authentication screen). This is performed in order to prevent a person other than seller Cs from pretending to be seller Cs. Agreement information DA1c includes data for identifying buying applicant Cc in order that an agreement may not be obtained with unexpected buying applicant Cc.

When agreement is obtained after negotiations, buying applicant Cc clicks Buying Applicant-side Agreement Button 828 as evidence of the agreement. Clicking will create agreement information DB1c and send it to the central equipment 10. When clicking Buying Applicant-side Agreement Button 828 is accepted, personal authentication is needed (clicking Buying Applicant-side Agreement Button 828 will display an authentication screen). This is performed in order to prevent a person other than buying applicant Cc from pretending to be buying applicant Cc.

If Room for Price Negotiation 815 is set to "No," buying applicant Cc cannot conduct price negotiations. In this case, a transfer transaction will be performed at seller Cs's price. So seller Cs selects a person from List of Applicants for Buying Coupon 825 to whom seller Cs sells his coupon, and then clicks Seller-side Agreement Button 827. By simply doing so, the judgment that agreement has been obtained will be made. It therefore is desirable that a method for displaying a message to attract buying applicant Cc' s attention to this on the screen of the buying applicant terminal 30B in the case of buying applicant Cc applying is provided.

If both Seller-side Agreement Button 827 and Buying Applicant-side Agreement Button 828 (or only Seller-side Agreement Button 827) are clicked, the central equipment 10 judges that the transfer transaction has been closed and displays "Agreed" in Display of Transaction Agreement 825b. In addition, settling, such as deducting an amount from an account, will be performed after clicking both Seller-side Agreement Button 827 and Buying Applicant-side Agreement Button 828. This will be described later.

### (Operations)

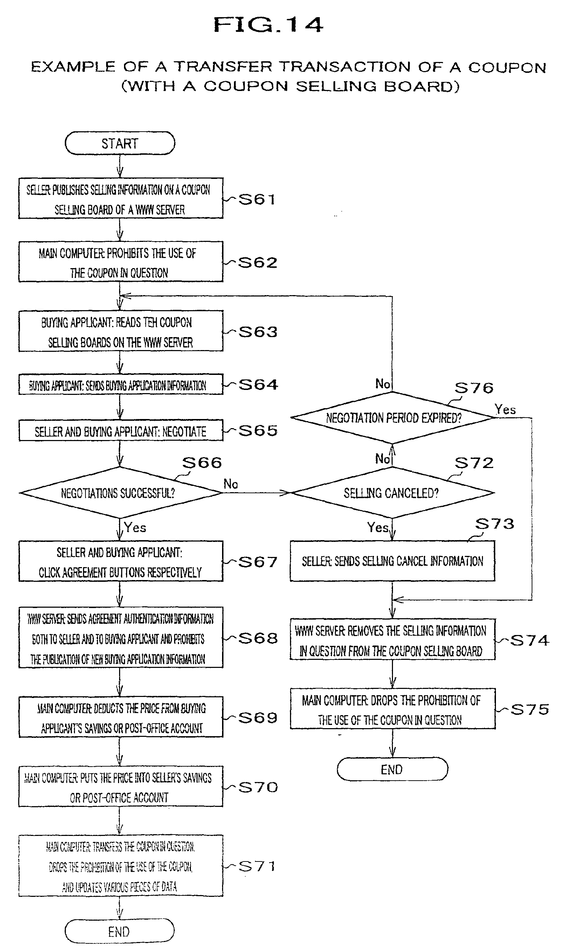

Next, an example of the operations in the section concerning a transfer transaction of a coupon will be described by reference to Figs. 13 and 14 (and by suitable reference to Figs. 2 and 9 through 12). Fig. 13 is a flow chart in the case of publishing selling information on a coupon selling board. Fig. 14 is a flow chart showing the whole of a transfer transaction of a coupon with a coupon selling board.

In this embodiment, a transfer transaction of a coupon will be performed in the following way. Seller Cs (customer C who intends to resell a coupon) sends selling information DA1b to the central equipment 10 and a coupon transaction program creates the coupon selling board 810 on the basis of selling information DA1b and publishes it on the WWW server 12.

Publishing selling information on a coupon selling board:

In Fig. 13, seller Cs has access to the WWW server 12 (S41). Then home page data D1Aa is sent from the WWW server 12 (S42) and a home page is displayed on the seller terminal 30A (S43).

In order to sell his own coupon, seller Cs intends to publish selling information DA1b on a coupon selling board by clicking a link button (not shown) on the home page (S44). Then a request to send personal authentication information is sent from the WWW server 12 (S45). At this request, seller Cs sends personal authentication information DA1a by entering predetermined ID (customer number) and a password given previously (S46). The WWW server 12 forwards personal authentication information DA1a to the main computer 11 (S47). And a personal authentication program on the main computer 11 performs personal authentication (S48). Personal authentication may be performed with the IC card 35. In this case, the seller terminal 30A must be equipped with an IC-card reader.

After personal authentication, the main computer 11 (coupon management program) reads and gets owned coupon information classified by customer, that is to say, the owned coupon table classified by customer 760 shown in Fig. 7 regarding customer C in question with a customer number included in personal authentication information DA1a as a key (S49). And then the main computer 11 checks whether or not the available periods of the coupons have expired (S50). In this case, the coupon information file 700 shown in Fig. 4 is searched with Coupon Code 763 described in the owned coupon table classified by customer 760 as a key and Available Period 706 is obtained for each coupon. If there exist coupons the available period of which have expired, the owned coupon table classified by customer 760, the coupon information file 700 shown in Fig. 4, and the management table classified by coupon 710 shown in Fig. 5 are updated. Moreover, data indicating that the coupons have been extinguished because of the expiration of their available periods is recorded and stored by customers at need. These operations, such as updating data, are performed by a coupon management program.

The owned coupon information classified by customer which was obtained in this way and the expiration checking of the available period of which was done in this way is sent from the main computer 11 to the WWW server 12 (S51). The WWW server 12 (coupon transaction program) creates a data form for selling information on the basis of the owned coupon information classified by customer (S52). The data form for selling information is used to create selling information DA1b according to a fixed form, which will make it easier for seller Cs to create selling information DA1b. The data form for selling information includes information regarding coupons owned by seller Cs.

The data form for selling information is sent to the seller terminal 30A as home page data D1Aa (S53) and is displayed on the screen (S54). Seller Cs creates selling information DA1b on the basis of this data form for selling information and sends it to the WWW server 12 (S55).

The WWW server 12 (coupon transaction program) publishes selling information DA1b from seller Cs on the coupon selling board 810 shown in Fig. 11 (S56). Furthermore, the coupon transaction program creates a detailed information screen shown in Fig. 12 from selling information DA1b and links it to Seller's Name (HN) 811 on the coupon selling board 810.

If selling information DA1b is published on the coupon selling board 810, the information published on this board is sent from the WWW server 12 to the main computer 11 (S57) and a coupon management program prohibits the use of the coupon in question (S58). The prohibition of the use of the coupon is written into Use Prohibited 713 in the management table classified by coupon 710 shown in Fig. 5 and doing the shopping with the coupon is prohibited. Not only the use of the coupon but also a transfer of the coupon to customer C whom the central equipment 10 has not authenticated may be prohibited in order to ensure the safety and fairness of the transfer transaction.

In this way, selling information DA1b from seller Cs will be held on the WWW server 12 so that it can be read. As a result, buying applicant Cc can be raised widely and transfer transactions will be activated.

### Example of a transfer transaction of a coupon:

An example of a transfer transaction of a coupon with a coupon selling board will now be described by reference to Fig. 14 (and by suitable reference to Figs. 11, 12, etc.).

First, seller Cs publishes selling information on the coupon selling board 810 on the WWW server 12 in compliance with the above procedures (S61). Then, as described above, the main computer 11 prohibits the use of the coupon in question (S62).

Buying applicant Cc reads the coupon selling board 810 (S63). When buying applicant Cc reads the coupon selling board 810, he/she displays the detailed information screen 820 linked to it to examine the contents carefully.

If buying applicant Cc applies for selling information, he/she sends buying application information DB1b to the WWW server 12 (S64). As a result, buying application information DB1b will be published on List of Applicants for Buying Coupon 825.

Next, seller Cs and buying applicant Cc negotiate (S65). If Room for Price Negotiation 815 is set to "Yes," for example, buying applicant Cc contacts seller Cs by E-mail by clicking Contact Seller Here 826 and conducts price negotiations with seller Cs. If the E-mail address is linked to Buying Applicant's Name (HN) 825a, for example, seller Cs may contact buying applicant Cc. Price negotiations can be conducted not only by E-mail but also by other methods, such as chat or BBS.

If Room for Price Negotiation 815 is set to "No," price negotiations cannot be conducted, as described above. In this case, a transfer transaction will be performed at seller Cs's price.

If price negotiations have been brought to a successful conclusion in step S66, seller Cs clicks Seller-side Agreement Button 827 and buying applicant Cc clicks Buying Applicant-side Agreement Button 828 (S67). In the case of clicking Seller-side Agreement Button 827 and Buying Applicant-side Agreement Button 828, personal authentication must be performed, as described above. This will prevent another person from pretending to be the person concerned or from playing a trick.

If Room for Price Negotiation 815 is set to "No," agreement will be obtained simply by seller Cs clicking Seller-side Agreement Button 827.

If Seller-side Agreement Button 827 and Buying Applicant-side Agreement Button 828 (or only 827) are clicked correctly, the central equipment 10 (coupon transaction program) will recognize that agreement on a transaction has been obtained, and the WWW server 12 sends agreement authentication information D1Ab and D1Bb to seller Cs and buying applicant Cc respectively. Agreement authentication information D1Ab and D1Bb can be sent by, for example, E-mail. The coupon transaction program also displays "Agreed" in Display of Transaction Agreement 825b. At the same time, the coupon transaction program prohibits the publication of new buying application information DB1b (S68). Selling information regarding the coupon in question may be removed from the coupon selling board 810 because the object of the transfer transaction has been achieved.

After agreement on the transfer transaction has been obtained, the main computer 11 (settling program) refers to Bank or Post Deposit Account 758 in the customer information file 750 shown in Fig. 6 and sends banking data D16a to the financial institution terminal 60. As a result, the price for the transfer transaction will be deducted from buying applicant Cc's savings or post-office account (S69). The deducted price is transferred to middle business entity M's savings or post-office account temporarily.

Next, the settling program takes away the fee, which was settled in advance under a contract between middle business entity M and customer C (i.e. seller Cs), from the price and puts the remainder into seller Cs's savings or post-office account (S70). As a result, seller Cs can receive the price.

At the same time, the main computer 11 (coupon management program) transfers the coupon in question to buying applicant Cc. The coupon management program also drops the prohibition of the use of the coupon and updates various pieces of data (S71). Data is updated by rewriting the management table classified by coupon 710 shown in Fig. 5 and the owned coupon table classified by customer 760 shown in Fig. 7. This transfers the coupon to buying applicant Cc and it becomes available. Alternatively, it can be transferred to another customer C. The prohibition of the use of the coupon may be dropped at the time when the price has been transferred to middle business entity M's savings or post-office account, since the possibility of short selling by seller Cs no longer exists.

If price negotiations were not brought to a successful conclusion in step S66 and selling is not canceled in step S72, the process returns to step S64, that is to say, seller Cs will negotiate with new buying applicant Cc provided that the negotiation period in step S76 has not expired. If selling is canceled in step S72, selling cancel information DA1d is sent from the seller terminal 30A to the central equipment 10 by the operation of seller Cs (S73). Selling cancel information DA1d is sent by clicking a selling cancel button 829 shown in Fig. 12.

When the WWW server 12 receives selling cancel information DA1d, it removes selling information of a coupon regarding information DA1d from the coupon selling board 810 (S74). This prevents new buying applicant Cc from appearing and therefore disorder in the transfer transaction. In addition, the main computer 11 drops the prohibition of the use of a coupon regarding information DA1d (S75). As a result, seller Cs will come to be able to use the coupon. The use of a coupon is prohibited by rewriting Use Prohibited 713 in the management table classified by coupon 710 shown in Fig. 5. If the negotiation period has expired in step S76, then the process will jump to step S74.

In this way, a coupon is transferred smoothly from seller Cs to buying applicant Cc and seller Cs obtains the price for the coupon. Middle business entity M also obtains a fee for the transfer transaction. This will promote the use of a coupon. Seller Cs has the great advantage of being able to obtain a profit from selling a coupon the available period of which would have expired in a conventional case. Furthermore, Seller Cs can sell, so to speak, an unnecessary coupon on favorable conditions for him/her by using the WWW server 12. In addition, buying applicant Cc can obtain the coupon desired and buy the goods desired with the coupon at less expense. From the point of view of requester P, on the other hand, this will lead to an increase in sales because its goods are bought, and the original object of the issuance of a coupon is achieved.

In addition, transferring a coupon via middle business entity M in this way will be able to prevent, for example, short selling of a coupon, which is often performed in transactions between persons (C to C), and to ensure the safety of a transfer transaction. Moreover, a transfer transaction can be performed promptly. It is desirable that middle business entity M holds both a coupon and the price therefor temporarily and then transfers the coupon and puts (transfers) the price. It is not desirable in terms of the safety of a transfer transaction to create a state in which one of seller Cs and buying applicant Cc holds both a coupon and the price therefor. In this embodiment, however, the use of a coupon can be prohibited by the central equipment 10. This also prevents short selling of a coupon and ensures the safety of a transfer transaction.

### «Transfer transaction of a coupon of the first modification»

A transfer transaction of a coupon described above is performed by transmitting (sending) selling information. In the first modification described below, however, a transfer transaction of a coupon is performed by sending buying information. Elements and devices which are the same as those in an electronic coupon transaction system of the above embodiment have the same signs and their descriptions will be omitted. Furthermore, a coupon is issued and used in the same way with the above embodiment. Descriptions of a section concerning the issuance and use of a coupon therefore will be omitted.

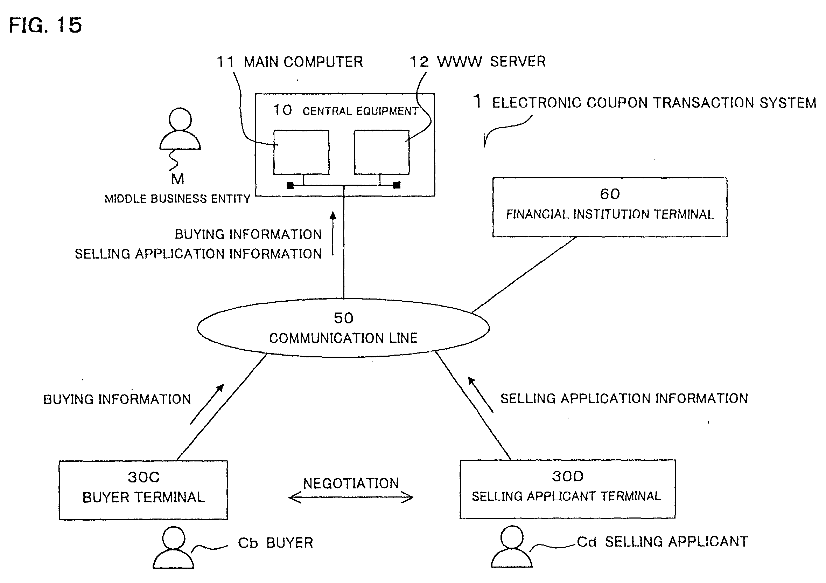

Fig. 15 is a block diagram of a section concerning a transfer transaction of a coupon of the first modification.

### (Entire configuration)

As shown in Fig. 15, the electronic coupon transaction system 1 of the first modification comprises the central equipment 10 managed by middle business entity M, a buyer terminal 30C owned by buyer Cb (person who sends buying information) of customer C, a selling applicant terminal 30D owned by selling applicant Cd (person who answers buying information) of customer C, the financial institution terminal 60, and the communication line 50.

The central equipment 10, the buyer terminal 30C, and the selling applicant terminal 30D are connected via the communication line 50 with Internet. The central equipment 10 and the financial institution terminal 60 are connected via the communication line 50, being a direct communication line. The number of buyer Cb and the buyer terminal 30C and selling applicant Cd and the selling applicant terminal 30D shown in Fig. 15 is only one respectively. But in reality the number of them is more than one respectively. Furthermore, the number of the financial institution terminal 60 can be more than one. These are the same with the above embodiment.

In the first modification, "seller Cs," "seller terminal 30A," "buying applicant Cc," and "buying applicant terminal 30B" in the above embodiment are read as "buyer Cb," "buyer terminal 30C," "selling applicant Cd," and "selling applicant terminal 30D" respectively. Descriptions of the central equipment 10, the buyer terminal 30C, the selling applicant terminal 30D, the financial institution terminal 60, and communication line 50 therefore will be omitted.

### (Files, tables, and the like; information, data, and the like)

Files, tables, and the like and information, data, and the like are much the same as those of the above embodiment; therefore, their descriptions will be omitted.

### (Home page data)

Home page data used in a section concerning a transfer transaction of a coupon will now be described.

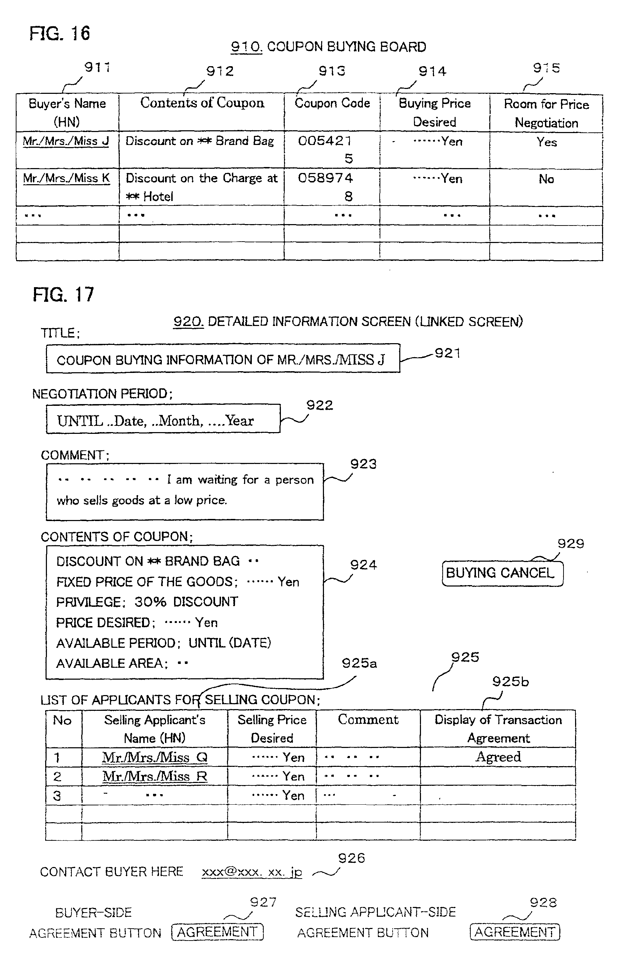

Fig. 16 is a view showing the structure of a coupon buying board displayed on a home page. Fig. 17 is a view showing the structure of a detailed information screen linked to Fig. 16. Home page data is displayed on the screens (not shown) of the buyer terminal 30C and the selling applicant terminal 30D.

As with the coupon selling board 810 described above, a coupon buying board 910 shown in Fig. 16 is linked to a home page on the WWW server 12. The coupon buying board 910 consists of items, such as Buyer's Name (HN) 911, Contents of Coupon 912, Coupon Code 913, Buying Price Desired 914, and Room for Price Negotiation 915. The number of these items can be increased or decreased at need. Customer C (buyer Cb) who wants to buy a coupon owned by another customer C uses the coupon buying board 910 in order to obtain (perform a transfer transaction of) the coupon from another customer C (selling applicant Cd). The coupon buying board 910 is created and updated on the basis of buying information from the buyer terminal 30C.

A customer number may be used as the contents of Buyer's Name (HN) 911. If buyer Cb has the intention to conduct price negotiations with selling applicant Cd, Room for Price Negotiation 915 is displayed as "Yes." Moreover, Buyer's Name (HN) 911 has a link and, therefore, clicking here will display a screen (detailed information screen 920) linked thereto.

The detailed information screen 920 shown in Fig. 17 consists of items, such as Title 921, Negotiation Period 922, Comment 923, Contents of Coupon 924, List of Applicants for Selling Coupon 925, Contact Buyer Here 926, Buyer-side Agreement Button 927, and Selling Applicant-side Agreement Button 928. List of Applicants for Selling Coupon 925 consists of items, such as Number, Selling Applicant's Name (HN) 925a, Selling Price Desired, Comment, Display of Transaction Agreement 925b. The number of these items can be increased or decreased at need. The detailed information screen 920 is basically displayed by coupons bought (by cases). The detailed information screen 920 will promote transfer transactions of coupons.

A customer number may be used as the contents of Selling Applicant's Name (HN) 925a Selling applicant Cd's E-mail address is linked to Selling Applicant's Name 925a at the request of selling applicant Cd. As a result, buyer Cb can smoothly conduct negotiations with selling applicant Cd. In addition, if Room for Price Negotiation 915 on the coupon buying board 910 is set to "Yes" and buyer Cb is open to negotiations with selling applicant Cd, his/her E-mail address is displayed in Contact Buyer Here 926. Selling applicant Cd therefore can smoothly conduct negotiations with buyer Cb. Buyer Cb and selling applicant Cd can negotiate by various methods, such as E-mail, telephone, mail, or a personal interview. Negotiation Period 922 sets a time limit for negotiation.

When agreement is obtained after negotiations, buyer Cb clicks Buyer-side Agreement Button 927 as evidence of the agreement. Clicking will create agreement information and send it to the central equipment 10. This is the same with the coupon selling board 810 described above.

When agreement is obtained after negotiations, selling applicant Cd clicks Selling Applicant-side Agreement Button 928 as evidence of the agreement. Clicking will create agreement information DB1c and send it to the central equipment 10. This is also the same with the coupon selling board 810 described above.

If both Buyer-side Agreement Button 927 and Selling Applicant-side Agreement Button 928 are clicked, the central equipment 10 judges that the transfer transaction has been closed and displays "Agreed" in Display of Transaction Agreement 925b. In addition, deducting an amount from an account, for example, will be performed.

### (Operations)

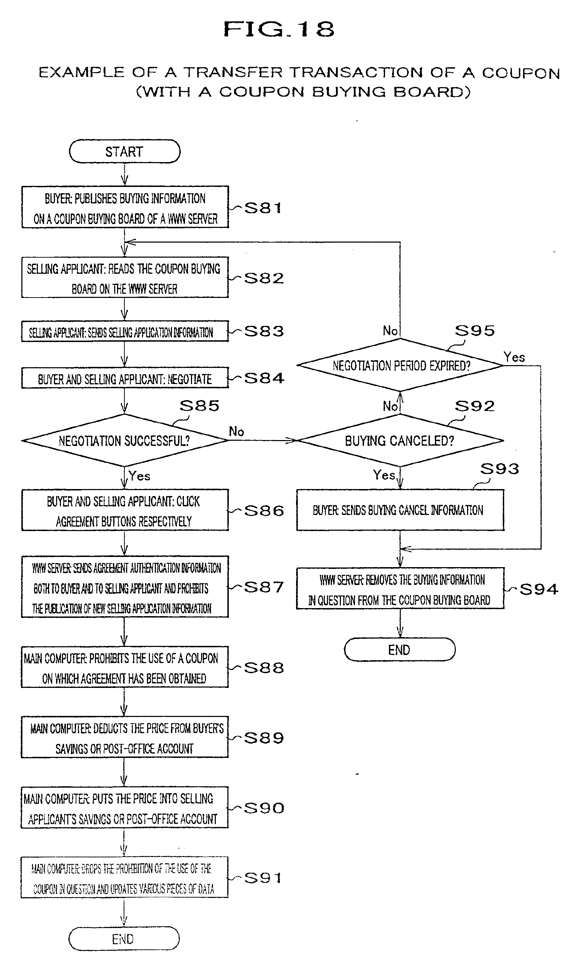

Next, an example of the operations in the first modification will be described by reference to Figs. 15 through 18. Fig. 18 is a flow chart showing the whole of a transfer transaction of a coupon with a coupon buying board.

In the first modification, a transfer transaction of a coupon will be performed in the following way. Buyer Cb (customer C who intends to obtain a coupon from another customer C) sends buying information to the central equipment 10 and a coupon transaction program creates the coupon buying board 910 and detailed information screen 920 on the basis of the buying information and publishes them on the WWW server 12.

A method for publishing buying information on the coupon buying board 910 is the same as that for publishing selling information in the above embodiment; therefore, its descriptions will be omitted. The use of a coupon is not prohibited. Publishing buying information on the coupon buying board 910 enables to raise selling applicant Cd widely, which activates transfer transactions.

### Example of a transfer transaction of a coupon:

An example of a transfer transaction of a coupon with a coupon buying board will now be described by reference to Fig. 18 (and by suitable reference to Figs. 15 through 17, etc.).

First, buyer Cb publishes buying information on the coupon buying board 910 on the WWW server 12 (S81).

Selling applicant Cd reads the coupon buying board 910 (S82). When selling applicant Cd reads the coupon buying board 910, he/she displays the detailed information screen 920 linked thereto to examine the contents carefully.

If selling applicant Cd applies for buying information, he/she sends selling application information to the WWW server 12 (S83, see Fig. 15). As a result, selling application information will be published on List of Applicants for Selling Coupon 925.

Next, buyer Cb and selling applicant Cd negotiate (S84). If Room for Price Negotiation 915 is set to "Yes," for example, selling applicant Cd contacts buyer Cb by E-mail by clicking Contact Buyer Here 926 and conducts price negotiations with buyer Cb. If the E-mail address is linked to Selling Applicant's Name (HN) 925a, for example, buyer Cb may contact selling applicant Cd. Price negotiations can be conducted by various methods, as described above.

If Room for Price Negotiation 915 is set to "No," price negotiations cannot be conducted. In this case, a transfer transaction will be performed at buyer Cb's price.

If price negotiations have been brought to a successful conclusion in step S85, buyer Cb clicks Buyer-side Agreement Button 927 and selling applicant Cd clicks Selling Applicant-side Agreement Button 928 (S86). In the case of clicking Buyer-side Agreement Button 927 and Selling Applicant-side Agreement Button 928, personal authentication must be performed, as described above. This will prevent another person from pretending to be the person concerned or from playing a trick.

If Room for Price Negotiation 915 is set to "No," agreement will be obtained simply by buyer Cb clicking Buyer-side Agreement Button 927.

If Buyer-side Agreement Button 927 and Selling Applicant-side Agreement Button 928 (or only 927) are clicked correctly, the central equipment 10 (coupon transaction program) will recognize that agreement on a transaction has been obtained, and the WWW server 12 sends agreement authentication information to buyer Cb and selling applicant Cd. Agreement authentication information can be sent by, for example, E-mail. The coupon transaction program also displays "Agreed" in Display of Transaction Agreement 925b. At the same time, the coupon transaction program prohibits the publication of new selling application information (S87). Buying information regarding the coupon in question may be removed from the coupon buying board 910 because the object of the transfer transaction has been achieved.

After agreement on a transfer transaction has been obtained, the main computer 11 (settling program) prohibits the use of a coupon a transfer transaction of which will be performed (S88) in order to prevent trouble with the transfer transaction. The use of a coupon is prohibited by writing "Yes" in Use Prohibited 713 in the management table classified by coupon 710 shown in Fig. 5.

Then the main computer 11 refers to Bank or Post Deposit Account 758 in the customer information file 750 shown in Fig. 6 and sends banking data to the financial institution terminal 60. As a result, the price for the transfer transaction will be deducted from buyer Cb's savings or post-office account (S89). The deducted price is transferred to middle business entity M's savings or post-office account temporarily.

Next, the price is put into selling applicant Cd ' s savings or post-office account with the fee, which was settled in advance under a contract between middle business entity M and customer C (i.e. selling applicant Cd), taken away (S90). As a result, selling applicant Cd can receive the price.

At the same time, the main computer 11 transfers the coupon in question to buyer Cb. The main computer 11 also drops the prohibition of the use of the coupon and updates various pieces of data (S91). Data is updated by rewriting the management table classified by coupon 710 shown in Fig. 5 and the owned coupon table classified by customer 760 shown in Fig. 7. This transfers the coupon to buyer Cb and it becomes available. Alternatively, it can be transferred to another customer C.

If price negotiations were not brought to a successful conclusion in step S85 and buying is not canceled in step S92, the process returns to step S82, that is to say, buyer Cb will negotiate with new selling applicant Cd provided that the negotiation period in step S95 has not expired. If buying is canceled in step S92, buying cancel information is sent from the buyer terminal 30C to the central equipment 10 by the operation of buyer Cb (S93). Buying cancel information is sent by clicking Buying Cancel Button 929 shown in Fig. 17. If the negotiation period has expired in step S95, then the process will jump to step S94.

When the WWW server 12 receives buying cancel information, it removes buying information of a coupon regarding the information from the coupon buying board 910 (S94). This prevents new selling applicant Cd from appearing and therefore disorder in the transfer transaction.

In this way, a coupon is transferred smoothly from selling applicant Cd to buyer Cb and selling applicant Cd obtains the price for the coupon. Middle business entity M also obtains a fee for the transfer transaction. As a result, buyer Cb can obtain the coupon desired and buy the goods desired with the coupon at less expense. In addition, with the WWW server 12 buyer Cb can perform a transfer transaction on favorable conditions for him/her. From the point of view of requester P, on the other hand, this will lead to an increase in sales because its goods are bought, and the original object of the issuance of a coupon is achieved. With the WWW server 12, selling applicant Cd also can sell a coupon the available period of which would expire in a conventional case to buyer Cb who has presented favorable conditions for him/her.

Furthermore, as with the above embodiment, the safety of a transfer transaction can be ensured.

### «Transfer transaction of a coupon of the second modification»

The second modification of the example will now be described. In this modification, a transfer transaction is performed in the form of a middle business entity buying a customer's coupon. Elements and devices which are the same as those in an electronic coupon transaction system of the above embodiment have the same signs and their descriptions will be omitted. Furthermore, a coupon is issued and used in the same way with the above embodiment. Descriptions of a section concerning the issuance and use of a coupon therefore will be omitted.

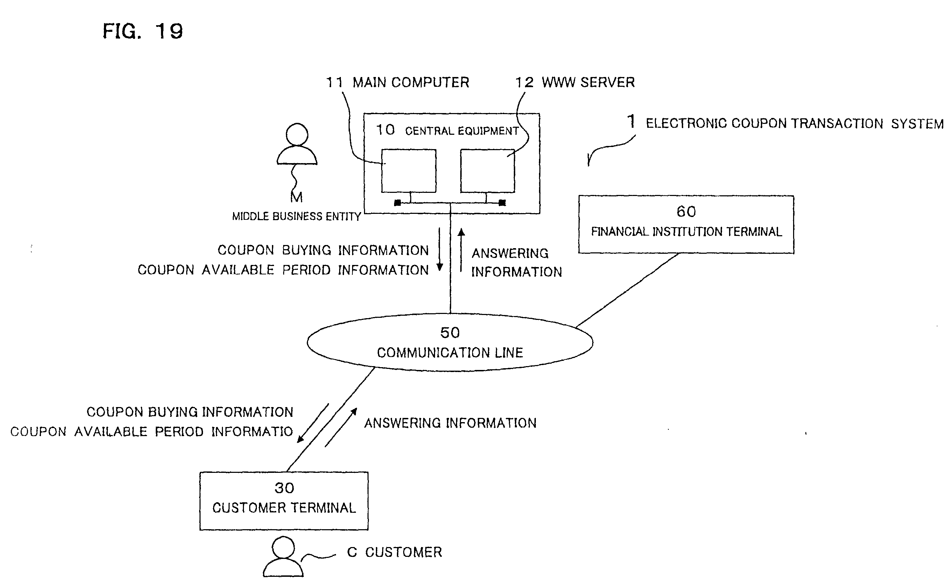

Fig. 19 is a block diagram of a section concerning a transfer transaction of a coupon of the second modification.

As shown in Fig. 19, an electronic coupon transaction system 1A of the second modification comprises the central equipment 10 managed by middle business entity M, the buyer terminal 30C owned by customer C, the financial institution terminal 60, and the communication line 50.

The central equipment 10 and the customer terminal 30 are connected via the communication line 50 with Internet. Furthermore, the central equipment 10 and the financial institution terminal 60 are connected via the communication line 50, being a direct communication line. The number of customer C and the customer terminal 30 shown in Fig. 19 is only one respectively. But in reality the number of them is more than one respectively. Furthermore, the number of the financial institution terminal 60 can be more than one.

The central equipment 10, files, tables, and the like, etc. are the same as those in the above embodiment; therefore their descriptions will be omitted. An electronic coupon transaction system of the second modification includes available period information notifying means and coupon buying means.

### (Available period information notifying means)

The available period information notifying means searches the coupon information file 700 shown in Fig. 4 at stated intervals and reads information regarding a coupon the available period of which will soon expire. In this case, information regarding a coupon may be read, for example, every day, every second day, or every eighth day. "The available period will soon expire" means that the available period will expire in, for example, twenty days . However, the number of the days (twenty, in this case) may be set to one month or fifteen days. Alternatively, it may be varied, depending on the length of the available period of each coupon.

Next, the available period information notifying means searches the management table classified by coupon 710 shown in Fig. 5 with Coupon Code 701 read from the coupon information file 700 as a key and lists customer C (owner) who owns a coupon the available period of which will soon expire.

And the available period information notifying means sends, by E-mail, coupon available period information (coupon available period information D13b in Fig. 1) consisting of data for identifying the coupon the available period of which will soon expire and a message to the effect that the available period will soon expire from the WWW server 12 to customer C listed.

Noticing in this way that the available period will soon expire can prevent the expiration of the available period of a coupon and promote the use of a coupon.

### (Coupon buying means)

The coupon buying means, in conjunction with the above coupon available period information notifying means, creates coupon buying information by writing a message to the effect that middle business entity M will buy the coupon in question into coupon available period information sent.

Customer C who received coupon buying information sends answering information by accessing a home page on the WWW server 12. Answering information may be an answer to the effect that customer C accepts the coupon buying information or one to the effect that customer C does not accept it. A page for answering coupon buying information is linked to a home page. The WWW server 12 CGI-processes the answering information received.

With answering information to the effect that customer C accepts the coupon buying information, data, such as the management table classified by coupon 710 shown in Fig. 5, will be rewrote in order to transfer the coupon in question to middle business entity M. In addition, the price will be transferred to an account of customer C in question via the financial institution terminal 60.

If a coupon is bought in this way, then cases where the available period of a coupon has expired without the owner knowing it will no longer exist. This therefore is beneficial both to customer C and to requester P. Furthermore, a transfer transaction of a coupon will be activated if middle business entity M buys it.

A mechanism in which price negotiations between middle business entity M and customer C can be performed may be used. A coupon bought by middle business entity M can be sold with the coupon selling board 810 and the coupon buying board 910 described in the above embodiment and the first modification.

### «Transfer transaction of a coupon of the third modification (transfer of a points

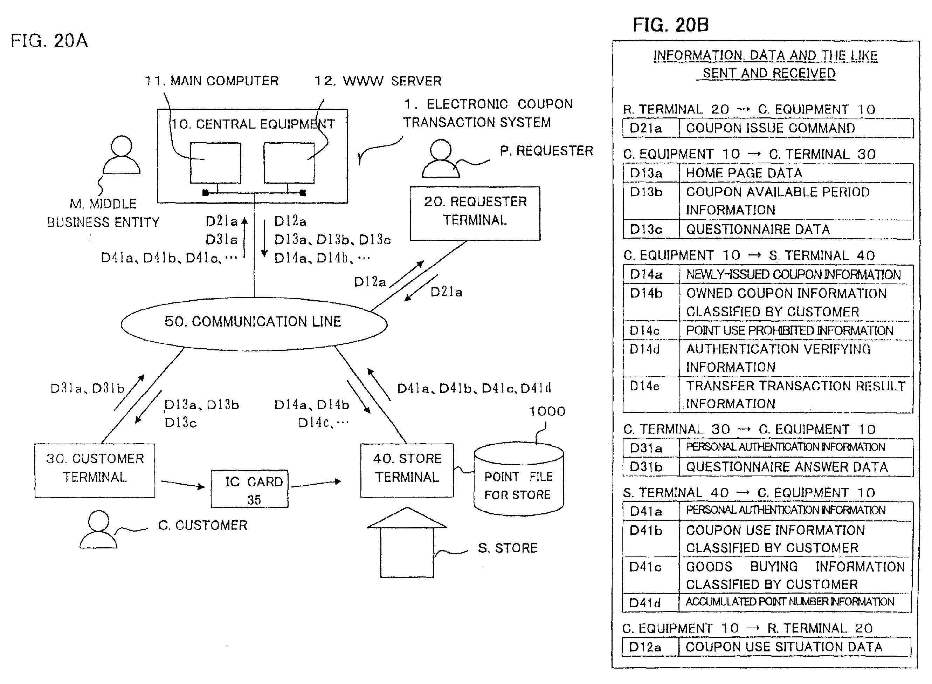

The third modification will now be described by reference to Figs. 20 to 22 (and by suitable reference to Fig. 4 etc.). In the third modification, a coupon is a point and the use of a point and a transfer transaction of the point at a store which adopts its own point system will be described.

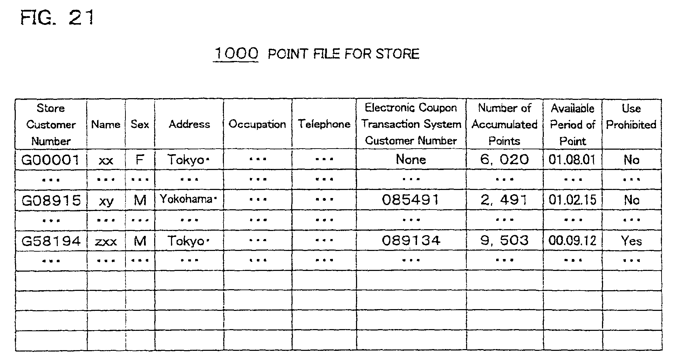

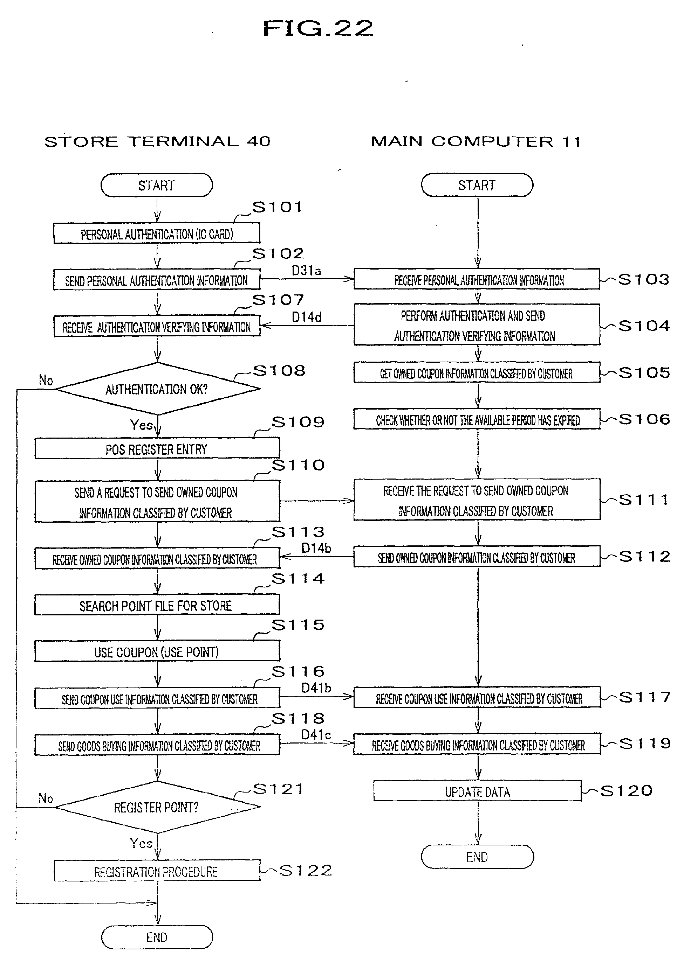

Fig. 20 is a block diagram of a section concerning the issuance and use of a coupon (point) in an electronic coupon transaction system and a table showing data and the like sent and received there. Fig. 21 is a view showing the logical structure of a point file for store at a store which adopts a point system. Fig. 22 is a flow chart for describing the operations of central equipment and a store terminal in the case of a customer doing the shopping. Elements and devices which are the same as those in an electronic coupon transaction system of the above embodiment have the same signs and their descriptions will be omitted.

This modification is based on the following (see Fig. 20):

Store S issues a point card independently and adopts its own point system. Therefore, a point which occurs when he/she do the shopping at store S is managed on a point file for store 1000 on the store S side.

A point which can be used with the IC card 35 distributed to customer C is usually one as a coupon managed by the central equipment 10. However, If customer C registers himself/herself as a member of a point system adopted by store S, the IC card 35 also serves as a point card for store S (that is to say, with the IC card 35, a point managed by store S also can be used) . Requester P who requests to issue a point as a coupon is not limited to the manager of store S. For example, a supplier who supplies store S with commodities may request to issue a point as a coupon.

### (Entire configuration)

The entire configuration of the electronic coupon transaction system 1 is shown in Fig. 20. The configuration is much the same as that shown in Fig. 1, so its description will be omitted. The store terminal 40 adopts its own point system and has the point file for store 1000.

### (Files, tables, and the like)

Files, tables, and the like used in this modification will now be described.

As shown in Fig. 21, the point file for store 1000 of the store terminal 40 consists of items, such as Store Customer Number, Name, Sex, Address, Occupation, Telephone, Electronic Coupon Transaction System Customer Number, Number of Accumulated Points, Available Period of Point, and Use Prohibited. The number of these items can be increased or decreased at need. Store Customer Number is a number unique to store S and is different from a customer number in the electronic coupon transaction system 1. This item is necessary for store S to uniquely manage a point which occurs when a customer does the shopping at store S. Electronic Coupon Transaction System Customer Number is a customer number in the electronic coupon transaction system 1. This item is necessary to combine the electronic coupon transaction system 1 with a point system unique to store S. Number of Accumulated Points indicates the total number of points which occurred according to the amount of the shopping done at store S by customer C. For example, if customer C with the store customer number of G08915 uses his/her points, then he/she can make a purchase of 2,491 yen. Available Period of Point indicates the last day of the available period of a point managed by the point file for store 1000. Available Period of Point is updated each time customer C does the shopping, and is set to the date one year from the shopping day. Use Prohibited is necessary to prevent short selling in a transfer transaction of a point. This item will be rewritten on the basis of point use prohibited information D14c described later. "Yes" in Use Prohibited field means that a point has become an object of a transfer transaction (for example, it has been offered for sale), so the use of the point is prohibited. On the other hand, "No" in Use Prohibited field means that the owner of the point can use it freely.

In this modification, the point file for store 1000 is read into the store terminal 40, but it may read into the main computer 11 of the central equipment 10, of course.

In the third modification, a coupon is a point occurring for all commodities which store S keeps, so, unlike the basic example, the store terminal 40 does not contain a coupon information file for store. Other files, tables, and the like are the same as those described with reference to Figs. 4 to 8 and their descriptions therefore will be omitted.

### (Information, data, and the like)

Information, data, and the like used in this modification will now be described.

Newly-issued coupon information D14a in the third modification informs that a point which can be used as a coupon at store S was issued at the request of requester P.

Point use prohibited information D14c is used to rewrite Use Prohibited item in the point file for store 1000. Point use prohibited information D14c also informs that the point has become an object of a transfer transaction (information of transfer transaction object).

Accumulated point number information D41d informs the central equipment 10 of the number of points which customer C owns (accumulates) in a point system of store S and their available periods.

Transfer transaction result information D14e informs a point system of store S (store terminal 40) of the number of points transferred. The number of points in transfer transaction result information D14e can be zero, which means that a point was not transferred. When a point system of store S receives transfer transaction result information D14e, the point system of store S rewrites Number of Accumulated Points field in the point file for store 1000 for customer C who participated in the transfer transaction (who transferred his/her points).

Other information, data, and the like are the same as those described with reference to Fig. 1 and their descriptions therefore will be omitted.

### «Issuance and use of coupon (point)»

The operations of a section concerning the issuance and use of a point as a coupon will now be described with suitable reference to Figs. 20 to 22.

In this case, it is assumed that customer C has registered himself/herself as a member of the electronic coupon transaction system 1 and that he/she has not registered himself/herself as a member of a point system unique to store S.

A coupon (point) which can be used at store S was issued to customer C, so he/she goes to store S with the IC card 35 to do the shopping (he/she goes to store S for the first time). It is assumed that the number of points issued to customer C is 500 and that he/she goes to store S to buy a dry battery with the pretax price of 350 yen.

Customer C brings a dry battery to a cashier and performs personal authentication with the IC card 35 (S101). Then personal authentication information D31a is sent to the main computer 11 (central equipment 10) (S102). Data exchange between the main computer 11 and the store terminal 40 is performed via the communication line 50 (direct communication line).

When the main computer 11 receives personal authentication information D31a (S103), it performs personal authentication and sends the store terminal 40 authentication verifying information D14d, being the result of the personal authentication (S104). Any authentication method may be used. After the authentication, the main computer 11 obtains owned coupon information classified by customer (S105) and checks whether or not the available period of the points has expired (S106), as described above with reference to Fig. 9.

On the other hand, the store terminal 40 which received authentication verifying information D14d accepts POS register entry if it decides in step S108 that authentication has been performed (S109). The store terminal 40 terminates the procedure if it decides that authentication has not been performed.

If authentication has been performed, the store terminal 40 sends, after the POS register entry, a request to send owned coupon information classified by customer to the main computer 11 (S110). When the main computer 11 receives this request (S111), it sends the store terminal 40 owned coupon information classified by customer D14b (S112). In this case, the contents of owned coupon information classified by customer D14b are that the number of points owned by customer C is 500.

The store terminal 40 searches the point file for store 1000 (see Fig. 20) with a customer number used for personal authentication (shown in Electronic Coupon Transaction System Customer Number field) as a key (S114) and confirms a value in Number of Accumulated Points field. Customer C is not a member of the point system unique to store S, so his/her data is not registered with the point file for store 1000. A value in Number of Accumulated Points field therefore is zero. As a result, customer C owns only 500 points issued from the electronic coupon transaction system 1 and uses (spends) them for (in) doing the shopping (S115).

When the points are used, the sending and receiving of coupon use information classified by customer D41b (S116 and S117) and the sending and receiving of goods buying information classified by customer D41c (S118 and S119) are performed. In addition, various pieces of data on the main computer 11 are updated (S120). These processes are the same as those described above with reference to Fig. 9 and their descriptions therefore will be omitted.

Customer C who owned 500 points made a purchase of 350 yen. As a result, some of the points remain. However, the main computer 11 removes management table classified by coupon 710 (see Fig. 5) etc. regarding the points and considers the 500 points to be used up.

On the other hand, the store terminal 40 (store S) ask customer C whether or not he/she registers the remaining points with the point system of store S (S121). If customer C registers them, then he/she fills in papers etc. and submits them to store S. By doing so, data regarding customer C in question is written into the point file for store 1000 and customer C becomes a member of the point system of store S. Then the remaining points are written into a record for customer C in question which has just been created in the point file for store 1000. After this registration, the IC card 35 will function as a point card for store S. This enables store S to get a new member.

In the third modification, points not registered will lapse.

If customer C makes a purchase of, for example, 1,000 yen, then new points will occur. In this case, the process in step S122 described above is also performed. As a result, data regarding customer C in question is written into the point file for store 1000 and customer C becomes a member of the point system of store S. Points which occurred are written into Number of Accumulated Points field included in a record for customer C in question in the point file for store 1000. After this registration, the IC card 35 will function as a point card for store S. In this case, too, store S can get a new member.

By the way, if customer C has joined the electronic coupon transaction system 1 and the point system of store S separately, then Electronic Coupon Transaction System Customer Number field in the point file for store 1000 remains blank. As a result, the IC card 35 does not function as a point card for store S. However, if customer C carries out the procedure for registration at store S and writes his/her customer number in the electronic coupon transaction system 1 into Electronic Coupon Transaction System Customer Number field in the point file for store 1000, then the IC card 35 will also function as a point card for store S. This will lead to a decrease in the number of customer C's cards.

### <Transfer transaction of a coupon (point)>

A transfer transaction of a point as a coupon will now be described. A transfer transaction in the third modification is performed to transfer customer C's points accumulated in a point system adopted by store S.

Customer C's customer number in the electronic coupon transaction system 1 has been written into Electronic Coupon Transaction System Customer Number field in the point file for store 1000.

As stated above, if customer C does the shopping at store S which adopts a point system, points occur and are accumulated in the point file for store 1000. As in the basic example described above, a transfer transaction of the accumulated points can be performed with the coupon selling board 810 (see Fig. 11).

For example, customer C registered with the point file for store 1000 shown in Fig. 21 by the store customer number of G58194 intends to put 9,000 points (or 9,001 points) of 9,503 points on sale and publishes to that effect on the coupon selling board 810, as in the basic example. Then point use prohibited information D14c is sent from the main computer 11 to the store terminal 40. The store terminal 40 rewrites Use Prohibited item in the point file for store 1000 from "No" to "Yes" on the basis of point use prohibited information D14c (see Fig. 21). As a result, customer C who intends to put his/her points on sale (who intends to transfer his/her points) cannot use his/her points for store S, which prevents short selling. When the information is published on the coupon selling board 810, personal authentication etc. are performed, as shown in Fig. 13. In that case, the main computer 11 is informed of Number of Accumulated Points and Available Period of Point in the point file for store 1000 (Accumulated point number information D41d).

After the information is published on the coupon selling board 810, a transfer transaction will be performed between a seller and a buyer in compliance with the same procedure that is shown by the flowchart of Fig. 14. After the transfer transaction is completed, transfer transaction result information D14e is performed from the main computer 11 to the store terminal 40 and Number of Accumulated Points item in the point file for store 1000 for customer C who transferred his/her points is rewritten (Use Prohibited item is also set to "No"). The transferred points may be managed on the central equipment 10 side or on the store terminal 40 (point file for store 1000) side. In the third modification, if the transferred points are managed on the central equipment 10 side, then, for example, management table classified by coupon 710 (see Fig. 5) and the owned coupon table classified by customer 760 (see Fig. 7) are created. On the other hand, if the transferred points are managed on the store terminal 40 side, then the point file for store 1000 is rewritten (the buyer needs to have joined or to join the point system of store S). Even if a transfer transaction is not performed, transfer transaction result information D14e is performed from the main computer 11 to the store terminal 40 and Use Prohibited item in the point file for store 1000 for customer C who intended to transfer his/her points is rewritten from "Yes" to "No." In this case, the contents of transfer transaction result information D14e are that the number of points is zero, as stated above.

When the transfer transaction is completed in this way, another customer C being a new owner of the points can use them at store S in question.

A transaction of points which occurred in a point system unique to store S can be performed in a form being the same as those in the first modification (reverse auction) and second modification (buying by middle business entity) . In order to buy points in the second modification, the central equipment 10 (electronic coupon transaction system 1) grasps information regarding the available period of points owned by each customer C. The available period of points can be grasped by obtaining Available Period of Point in the point file for store 1000 read into the store terminal 40. If the available period is extended by a predetermined length of time each time customer C does the shopping at store S, the available period of points can be grasped on the basis of goods buying information classified by customer D41c sent from the store terminal 40.

### «Electronic coupon use supporting system (second aspect)»

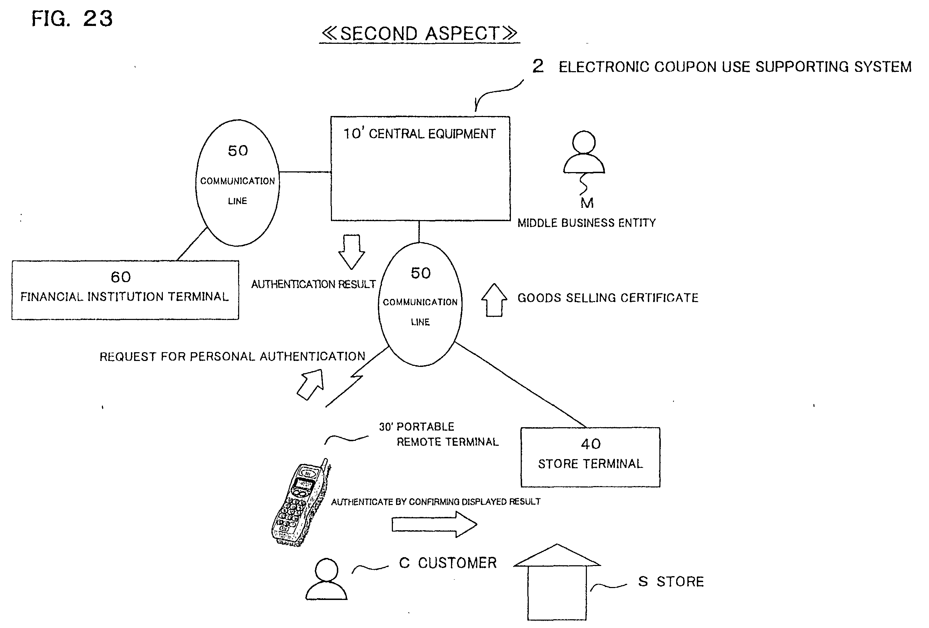

An embodiment of an electronic coupon use supporting system according to the second aspect of the present invention will now be described with reference to Figs. 23 to 26 (and with suitable reference to Fig. 1 etc.).

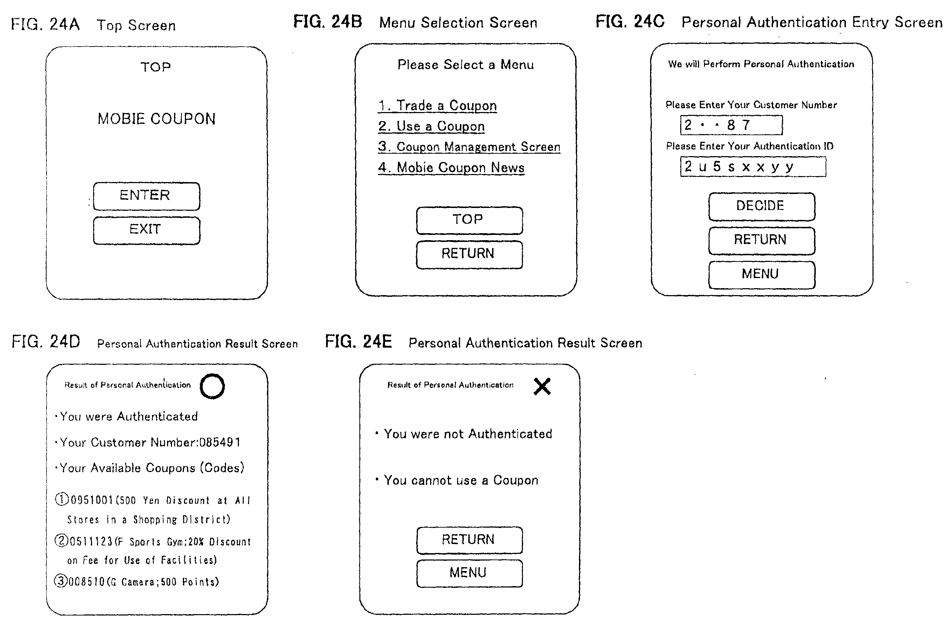

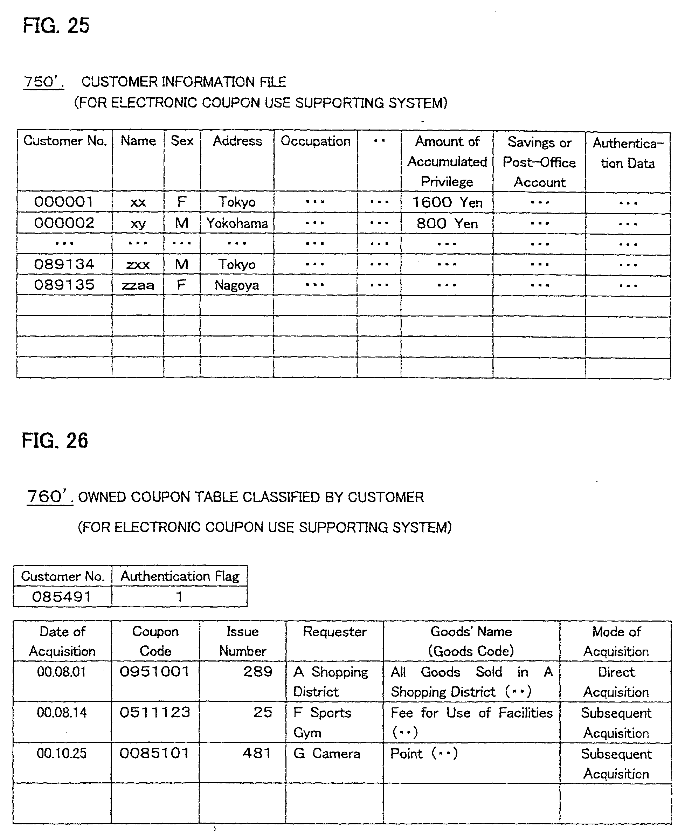

Fig. 23 referred to in this embodiment is a block diagram of an electronic coupon use supporting system. Fig. 24 is a view in which examples of screens displayed in the case of personal authentication being performed are arranged on a time series basis. Fig. 25 is a view showing the logical structure of a customer information file (modification of Fig. 6). Fig. 26 a view showing the logical structure of an owned coupon table classified by customer (modification of Fig. 7). Elements which are the same as those in the electronic coupon transaction system 1 (see Fig. 1) according to the first aspect of the present invention have the same signs and their descriptions will be omitted.

An electronic coupon use supporting system 2 in this embodiment performs personal authentication not with the IC card 35 (see Fig. 1) but with a portable remote terminal 30' of a coupon owner. Furthermore, a goods selling certificate which certifies that goods were sold to customer C is sent from the store terminal 40 (cash register) to central equipment 10'. Privilege based on a coupon (discount) will be given by transferring an amount to customer C's savings or post-office account (if the total of accumulated discounts reaches a fixed amount, then the amount will be transferred).

### (Entire configuration, tables and the like)

The central equipment 10' shown in Fig. 23 has all of the functions provided by the central equipment 10 in the above embodiment and modifications about the electronic coupon transaction system 1 and has opened a home page for providing these functions to the portable remote terminal 30'. In addition, the central equipment 10' has the function of performing personal authentication in response to a request for personal authentication from the portable remote terminal 30' and sending the result as data which can be displayed on the portable remote terminal 30'. The central equipment 10' also has the function of searching the contents of an owned coupon table classified by customer 760' and goods buying history table classified by customer 770 (see Fig. 8) in response to an inquiry from the portable remote terminal 30' and sending the result as data which can be displayed on the portable remote terminal 30'.

The portable remote terminal 30' is a cellular telephone which can be connected to Internet, and customer C who carries it uses a coupon (point) to do the shopping at store S.

A customer information file 750' shown in Fig. 25 includes Authentication Data (Authentication ID) item in order to perform personal authentication in response to a request for personal authentication from the portable remote terminal 30' of customer C (authentication data is unique). Moreover, the customer information file 750' includes Amount of Accumulated Privilege and Savings or Post-office Account items so that if privileges accumulate to a fixed amount, they can be transferred to customer C's savings or post-office account.

The owned coupon table classified by customer 760' shown in Fig. 26 includes Authentication Flag item so that if a customer is authenticated with the portable remote terminal 30', he/she can use a coupon. Authentication Flag item is usually set to "0," which prohibits the use of a coupon. After a customer is authenticated, Authentication Flag item is rewritten to "1," which enables the authenticated customer (coupon owner) to use his/her coupon. When the customer completes the shopping for which the personal authentication was performed or when a predetermined time (10 minutes, for example) has elapsed after Authentication Flag is rewritten to "1," Authentication Flag is rewritten from "1" to "0." In other words, until the customer is authenticated again, the use of a coupon is prohibited. The process of rewriting Authentication Flag, prohibiting the use of a coupon, or the like is performed by the coupon management program already described in the electronic coupon transaction system 1 (see Fig. 2 etc.).

### (Operations)

Operations for doing the shopping will now be described with reference to Figs. 23 through 26.

Customer C goes to store S with the portable remote terminal 30'. Customer C obtained a coupon from another person by the electronic coupon transaction system 1 in the above embodiment or modifications and is a coupon owner now. In store S, customer C selects goods for which a coupon has been issued and brings it to a cashier. Customer C accesses a home page for the electronic coupon use supporting system 2. Then a TOP screen (home page) of Fig. 24A appears. Customer C selects "ENTER" to display a menu selection screen of Fig. 24B. In order to use a coupon, customer C selects "2. Use a coupon." As a result, a personal authentication entry screen of Fig. 24C appears. Customer C enters his/her customer number and authentication ID on this screen. Customer C confirms that the entered customer number and authentication ID are correct, and then selects "Decide." The entered customer number and authentication ID are sent to the central equipment 10' (request for personal authentication). The central equipment 10' performs personal authentication by comparing the customer number and authentication ID sent with Customer Number and Authentication Data items in the customer information file 750'.

When customer C is authenticated, data to the effect that customer C was authenticated (authentication result) and information regarding a list of coupons owned by customer C are sent from the central equipment 10' to the portable remote terminal 30' of customer C and are displayed (see Fig. 24D). When customer C is authenticated, Authentication Flag in the owned coupon table classified by customer 760' is rewritten from "0" to "1," which makes it possible to use a coupon.

Customer C shows a clerk in store S the result (see Fig. 24D) displayed on the portable remote terminal 30'. The clerk confirms by the result displayed on the screen that customer C was authenticated. In addition, the clerk looks at a list of coupons displayed on the screen to confirm whether or not a coupon has been issued for goods bought by customer C. This confirmation can be performed easily on the basis of the result displayed on the screen of the portable remote terminal 30'. If there is no problem, then the clerk (or customer C) enters the customer number and coupon code displayed into a cash register (store terminal 40). The clerk (or customer C) can enter them reliably as he/she looks at the screen, of course.

The customer number and coupon code entered are sent to the central equipment 10' as a goods selling certificate. A customer number and a coupon code are entered in order to clearly inform the central equipment 10' who of customer C used what coupon (bought what goods). That is to say, the central equipment 10' cannot know only by personal authentication from the portable remote terminal 30', for example, whether goods were really bought. If a customer number is sent in this way when goods are bought, then unfair acts by customer C, such as the short selling of a coupon (obtaining privilege based on a coupon without buying goods by pretending to be a buyer of the goods) can be eliminated. Furthermore, this information is sent not from the portable remote terminal 30' but from the store terminal 40, which makes it easier to eliminate the unfair use of a coupon.

Here it is assumed that the result of personal authentication shown in Fig. 24D is false (false display). Really, customer C is not authenticated in this case, so Authentication Flag in the owned coupon table classified by customer 760' shown in Fig. 26 is not "1" but "0." A coupon therefore cannot be used. In other words, even if a false personal authentication result screen is created, the use of a coupon will be eliminated.

The central equipment 10' searches the owned coupon table classified by customer 760' on the basis of the information (customer number and coupon code) sent and confirms whether or not customer C really owns the coupon. If customer C owns the coupon, then he/she uses it. As a result, Amount of Accumulated Privilege field in the customer information file 750' shown in Fig. 25 is rewritten to add an amount (in order to enjoy the privilege later in the case of this embodiment). Moreover, Authentication Flag in the owned coupon table classified by customer 760' shown in Fig. 26 is rewritten to "0." In addition, the coupon used lapses. Various pieces of data are also updated. If customer C does not do the shopping, then Authentication Flag in the owned coupon table classified by customer 760' will be rewritten to "0" ten minutes from the personal authentication. As a result, a coupon cannot be used only by entering customer C's customer number into a cash register (store terminal 40). That is to say, authentication operation by customer C is always necessary, so security in the use of a coupon will be improved (even if customer C causes, for the purpose of deceiving a store clerk, the code of a coupon he/she does not own to be displayed on the screen of the portable remote terminal 30' (false display), he/she cannot enjoy its privilege, of course.

When Amount of Accumulated Privilege in the customer information file 750' shown in Fig. 25 reaches a fixed amount (1,000 yen, for example), the accumulated privileges are given to customer C by computer banking using the financial institution terminal 60 shown in Fig. 23.

On the other hand, if customer C is not authenticated (personal authentication fails), then data to the effect that customer C was not authenticated is sent from the central equipment 10' to the portable remote terminal 30' of customer C and are displayed (see Fig. 24E). Customer C is not authenticated, so Authentication Flag in the owned coupon table classified by customer 760' remains "0." That is to say, a state in which the use of a coupon is prohibited is maintained.

With an electronic coupon use supporting system according to the second aspect of the present invention, as stated above, equipment, such as an IC card reader, for performing personal authentication is unnecessary in store S. Store S must be equipped only with simple equipment (store terminal 40) which can send a customer number and a coupon code to the central equipment 10' at need. In other words, a database, a complex mechanism, and the like for achieving the use of a coupon are unnecessary in store S. The reason for this is that all, including a database, is held and managed unitarily by the central equipment 10'. Security in the use of a coupon is also ensured, of course. The processes of confirming by the screen of the portable remote terminal 30' of customer C that customer C is authenticated and of entering a customer number and coupon code into a cash register (store terminal 40) must be performed at store S. These are very easy. Other processes are performed by the central equipment 10' and customer C (portable remote terminal 30'). In addition, if customer C performs entering operation, then only confirmation will be required of a clerk in store S.

That is to say, with the portable remote terminal 30' of customer C and the central equipment 10', equipment installed in store S can be minimized. Operation required of a clerk in store S also can be minimized. As a result, the number of stores at which an electronic coupon can be used can be increased easily, resulting in the promotion of the use of a coupon.

Furthermore, customer C can perform various kinds of operation from his/her portable remote terminal 30', which is convenient to him/her. In addition, the IC card 35 for personal authentication (see Fig. 1) is unnecessary, which is also convenient to customer C.

"Commodity selling certificate" in the claims has been considered to be a customer number and a coupon code, but other items (which must be able to show who bought what or who bought at which store S) may be used in compliance with an arrangement between store S and an electronic coupon use system (middle business entity M).

Privilege was given later, but it may be given immediately at store S etc. In this case, the following method is recommended. After a goods selling certificate (customer number and coupon code) is sent to the central equipment 10' and confirmation is performed, information to the effect that permission for granting a privilege was given is sent from the central equipment 10' to the portable remote terminal 30' and is displayed on the screen of the portable remote terminal 30'.

Furthermore, the store terminal 40 is not necessarily located at store S which sold goods. For example, if store S in question is in a shopping district etc., a terminal located in an office etc. of the shopping district can be considered as the store terminal 40. The store terminal 40 can be located not at the accounting counter but at the service counter (information etc.) in store S.

If access to the owned coupon table classified by customer 760' etc. is prohibited after customer C is authenticated, then Authentication Flag in the owned coupon table classified by customer 760' may be omitted.

### «Electronic coupon use supporting system (third aspect)»

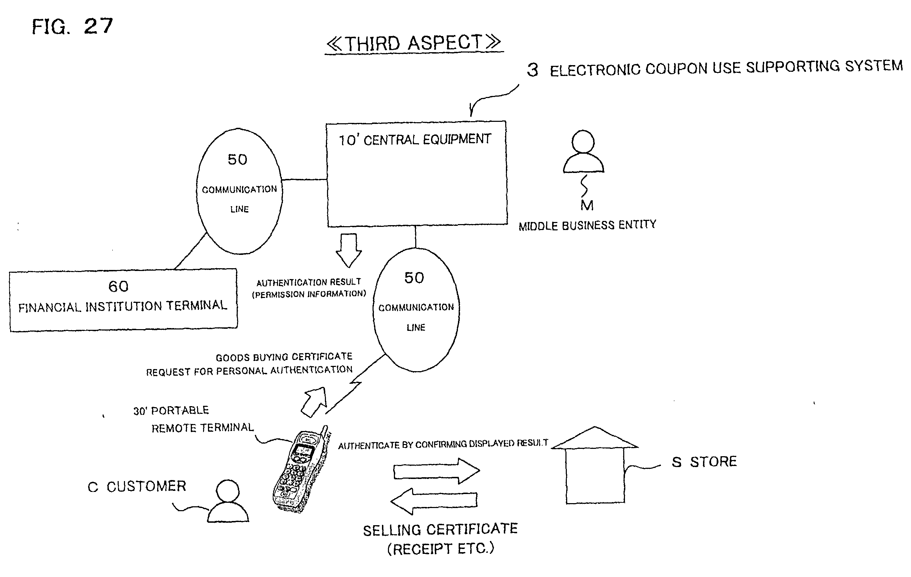

An embodiment of an electronic coupon use supporting system according to the third aspect of the present invention will now be described with reference to Fig. 27.

Fig. 27 referred to in this embodiment is a block diagram of an electronic coupon use supporting system. Elements which are the same as those in the electronic coupon transaction system 1 (see Fig. 1) according to the first aspect of the present invention and in the electronic coupon use supporting system 2 (see Fig. 23) according to the second aspect of the present invention have the same signs and their descriptions will be omitted.

With an electronic coupon use supporting system 3, data and information are all exchanged between the central equipment 10' and the portable remote terminal 30' of customer C. Therefore, the store terminal 40 (see Fig. 23) in the electronic coupon use supporting system 2 according to the second aspect of the present invention described above is unnecessary.

Except for a section concerning the store terminal 40 shown in Fig. 23, the entire configuration is the same as that of the electronic coupon use supporting system 2 according to the second aspect of the present invention described above and its description therefore will be omitted. A blank on which a unique password is written has been distributed from middle business entity M to store S. This blank is passed to customer C who bought goods as a goods buying certificate. The level of the uniqueness of a password (password number) can be set properly at need. The central equipment 10' includes a database corresponding to such a unique password. If such a password is not entered, the process for using a coupon will not be performed.

Operations in this embodiment will now be described.

As in the electronic coupon use supporting system 2 according to the second aspect of the present invention, customer C goes to store S with the portable remote terminal 30' (customer C owns a coupon). In store S, customer C selects goods for which a coupon has been issued and brings it to a cashier, as in the second aspect of the present invention. Furthermore, personal authentication is performed in the same way (see Fig. 24). Customer C shows a store clerk a personal authentication screen displayed on the portable remote terminal 30' and receives from the store clerk a blank on which a unique password is written. This blank corresponds to, so to speak, a goods selling certificate for the store S side.

Customer C enters this unique password into the portable remote terminal 30' and sends it to the central equipment 10' as a goods buying certificate. Furthermore, customer C sends the customer number and coupon code from the portable remote terminal 30' to the central equipment 10'. As a result, the central equipment 10' permits the use of the coupon. When Amount of Accumulated Privilege in the customer information file 750' shown in Fig. 25 reaches a fixed amount, customer C can receive the accumulated privileges by computer banking via the financial institution terminal 60.

After the above password is sent as a goods buying certificate from the portable remote terminal 30' to the central equipment 10' and confirmation is performed, information to the effect that permission for granting a privilege to customer C in question was given may be sent from the central equipment 10' to the portable remote terminal 30' and be displayed on the screen of the portable remote terminal 30'. By doing so, the privilege can be given immediately at store S etc.

Sending information to and receiving information from the central equipment 10' may be performed solely at customer C's home etc., which makes it unnecessary to show a clerk in store S the result of personal authentication. That is to say, sending information to and receiving information from the central equipment 10' does not have to be always performed with the portable remote terminal 30'. A stationary personal computer, for example, may be used instead. In this case, when customer C buys goods at store S for which a coupon has been issued, a clerk in store S passes the above blank to customer C at the request of customer C. Alternatively, goods are accompanied with the above blank in the stage of a factory shipment (it is desirable that a password cannot be obtained before goods are bought).

With an electronic coupon use supporting system according to the third aspect of the present invention, as stated above, there is no need to install special information-related equipment in store S. In addition, operations required of a clerk in store S in the use of a coupon can be all omitted. That is to say, the burden on the store side in the use of a coupon can be minimized or removed, which makes it very easy to adopt an electronic coupon. Even if an electronic coupon is adopted, security will be ensured when a coupon is used.

The central equipment 10' (electronic coupon use supporting system 3) does not have to manage coupons individually. This is the same with the electronic coupon use supporting system 2 according to the second aspect of the present invention.

The preferred embodiments of the first to third aspects of the present invention with their modifications have been described in detail, but the present invention is not limited to the above embodiments and modifications. The present invention can be modified and applied widely.

For example, an owned coupon table classified by customer shown in Fig. 7 (or its equivalent) and/or a goods buying history table classified by customer shown in Fig. 8 (or its equivalent) may be included in an IC card. That is to say, functions of central equipment may be given to an IC card (IC-card type). Like Mondex (E-cash), a coupon the owner of which is unrevealed may be also used (IC-card and open type). An IC card is not essential in the case of applying the present invention. In other words, an aspect of the present invention in which an IC card is not used is possible. In addition, a middle business entity and a requester were considered to be separate from each other, but they can be, for example, the same organization. Furthermore, a main computer and a WWW server do not have to be installed in the same place. For example, if a main computer is installed in our country, a WWW server may be installed in a foreign country. Moreover, the settlement of the price can be performed not only by automatically transferring from a savings or post-office account with a computer but also by, as is often the case with transactions with Internet, using a credit card. Both methods enable prompt settlement and are preferable for the settlement of a transfer transaction of a coupon with the available period. If settlement is performed with a credit card, the prohibition of the use of a coupon may be dropped the moment it is transferred. Settlement may be performed at a window or with an ATM in a financial institution.

Customers are ranked on the basis of the buying history of goods etc. and coupons weighted (having different privileges) according to these ranks may be issued. In addition, a coupon in the present invention can be one which is distributed (and stored) as electronic information and is used after, for example, being printed with a printer. Because an electronic coupon transaction system according to the present invention can be applied to a coupon which is passable as electronic information. In the above embodiment, the transaction history of the coupon in question is managed by "Date of Issue/Date of Transfer" and "Owner (Customer Number)" in a management table classified by coupon shown in Fig. 5. However, transaction history does not have to be always managed and only the current owner may be managed. If a coupon is a point, each point can be made an object of a transfer transaction. Furthermore, the coupon selling board 810 etc. in a transfer transaction of a coupon are examples and are not restrictive.

In addition, a point system unique to a store has been described. For example, however, the main computer 11 includes a point file for store (see Fig. 21) and the electronic coupon transaction system 1 may unitarily manage points which have been managed at each store, of course.

Moreover, a server corresponding to a cellular telephone which can be connected to Internet is located in central equipment and inquiries about the contents of an owned coupon table classified by customer (see Fig. 7) or a goods buying history table classified by customer (see Fig. 8) may be made from the cellular telephone of a customer. This enables customer C to do the shopping reliably.

In addition, it is possible to combine the first to third aspects of the present invention suitably and apply the combination.

Each of processes and operations in the above embodiments etc. can be replaced properly with a manual operation.

### (Advantageous effects of the invention)

(1) The invention according to claim 1 of the present invention described above will enable a prompt transfer transaction of an electronic coupon and can achieve, for example, the object of activating the use of a coupon. This is convenient both to a person who issues a coupon and to a person who uses a coupon.

The invention according to claim 2 can activate a transfer transaction of a coupon and make the use of a coupon more active.

The invention according to claim 3 can ensure the safety of a transfer transaction between a seller and a buying applicant and make a transfer transaction of a coupon more active.

The invention according to claim 4 can ensure the safety of a transfer transaction between a buyer and a selling applicant and make a transfer transaction of a coupon more active.

The invention according to claim 5 can prevent, for example, short selling of a coupon by a seller and ensure the safety of a transfer transaction.

The invention according to claim 6 can prevent the expiration of the available period of a coupon, for example, without the owner knowing it. Usually the available period is set particularly for a coupon, so the use and a transfer transaction of a coupon can be activated by notifying the owner of the available period.

The invention according to claim 7 can activate a transfer transaction of a coupon and make a fruitful use of a coupon, which is convenient especially for the owner of a coupon.

The invention according to claim 8 will shorten a time-lag between the planning of coupon issuance and the coupon issuance and enable, for example, a provider of goods to apply a coupon strategically.

The invention according to claim 9 will enable a prompt questionnaire and prompt goods development corresponding to a recent tendency of the life cycle of goods etc. to become short.

The invention according to claim 10 will enable a transfer transaction of a coupon which is used in another system. This can activate not only this system but also another system.

(2) The invention according to claim 11 will enable, by making use of a customer and his/her portable remote terminal, to minimize information equipment installed in a store and to reduce operations conducted by a store clerk etc. when a coupon is used. It is also convenient to a customer because he/she can make use of his/her information equipment. As a result, the use of an electronic coupon, for example, will be promoted.

The invention according to claim 12 will enable reliable use of a coupon.

(3) The invention according to claim 13 will make it unnecessary, by using a customer and a customer terminal, to install information equipment in a store. It also will make operations by a store clerk etc. in the case of a coupon being used unnecessary. It is also convenient to a customer because he/she can make the best use of his/her information equipment. As a result, the use of an electronic coupon, for example, will be promoted.

The invention according to claim 14 will enable, by using a portable remote terminal, to perform various processes anywhere and to receive a privilege based on a coupon immediately at a store.

## Claims

1. An electronic coupon transaction system with a computer for helping to issue and use electronic coupons, the electronic coupon transaction system comprising at least:
coupon issuing means for electronically generating the coupon and issuing the coupon to a predetermined person; and
coupon extinguishing means for extinguishing the coupon in the case of the coupon having been used,
the electronic coupon transaction system further comprising:
coupon transfer transaction means for enabling a transfer transaction to electronically transfer the coupon from the owner of the coupon to another person.

2. The electronic coupon transaction system according to claim 1, further comprising a coupon transaction server for holding selling information sent by a seller via a communication medium who intends to sell the coupon and/or buying information sent by a buyer via the communication medium who intends to buy the coupon so that the information can be read via the communication medium.

3. The electronic coupon transaction system according to claim 1 or 2, further comprising intent confirming means for confirming the intent of the seller and an applicant for buying who answers the selling information to perform a transaction, wherein in the case of the intent confirming means judging that there exists an agreement on a transaction, the coupon transfer transaction means permits a transfer of the coupon on which the agreement has been obtained and transfers the coupon electronically to the applicant for buying.

4. The electronic coupon transaction system according to claim 1 or 2, further comprising intent confirming means for confirming the intent of the buyer and an applicant for selling who answers the buying information to perform a transaction, wherein in the case of the intent confirming means judging that there exists an agreement on a transaction, the coupon transfer transaction means permits a transfer of the coupon on which the agreement has been obtained and transfers the coupon electronically to the buyer.

5. The electronic coupon transaction system according to claim 2 or 3, further comprising coupon use prohibiting means for prohibiting the use of the coupon in the case of selling information on the coupon being sent.

6. The electronic coupon transaction system according , to any of claims 1 to 5, further comprising available period information notifying means for notifying the owner of the coupon of available period information at the predetermined time before the expiration of the available period of this coupon in the case of the available period being set for the coupon.

7. The electronic coupon transaction system according to any of claims 1 to 6, further comprising coupon buying means for transferring the coupon to the electronic coupon transaction system by notifying the owner of the coupon of buying information to the effect of buying the coupon and getting agreement from the owner of the coupon.

8. The electronic coupon transaction system according to any of claims 1 to 7, wherein the coupon issuing means issues the coupon at a coupon issue command from a goods provider who provides goods for which the coupon has been issued.

9. The electronic coupon transaction system according to any of claims 1 to 8, further comprising questionnaire sending and receiving means for sending a questionnaire made up in advance to a predetermined person and receiving the results of the questionnaire.

10. The electronic coupon transaction system according to any of claims 1 to 9, further comprising:
another system communicating means for communicating with another coupon system using an electronic coupon;
owned coupon information obtaining means for obtaining owned coupon information in the another coupon system regarding a customer who has registered himself/herself with the another coupon system;
transfer transaction object notifying means for notifying the another coupon system of the coupon having become an object of a transfer transaction in the case of the another coupon becoming an object of a transfer transaction in the electronic coupon transaction system; and
transfer transaction result notifying means for notifying of the result of the transfer transaction.

11. A computer-based electronic coupon use supporting system for supporting the use of an electronic coupon, the electronic coupon use supporting system comprising at least:
coupon issuing means for electronically generating the coupon and issuing the coupon to a predetermined person; and
coupon extinguishing means for extinguishing the coupon in the case of the coupon having been used,
the electronic coupon use supporting system further comprising:
personal authentication means for performing personal authentication in response to a request for personal authentication sent via communication means from a portable remote terminal of a customer who owns the coupon;
personal authentication result information sending means for sending the result of the personal authentication as information being able to be displayed on the screen of the portable remote terminal; and
coupon use permitting means for permitting a customer who bought goods to use the coupon in the case of the personal authentication having been performed and a goods selling certificate for certifying that the goods for which the coupon had been issued were sold to the customer having been sent from a store terminal installed in a store at which the coupon is used.

12. The electronic coupon use supporting system according to claim 11, further comprising supporting means for sending the goods selling certificate to be sent from the store terminal as information being able to be displayed on the screen of the portable remote terminal.

13. A computer-based electronic coupon use supporting system for supporting the use of an electronic coupon, the electronic coupon use supporting system comprising at least:
coupon issuing means for electronically generating the coupon and issuing the coupon to a predetermined person; and
coupon extinguishing means for extinguishing the coupon in the case of the coupon having been used,
the electronic coupon use supporting system further comprising:
personal authentication means for performing personal authentication in response to a request for personal authentication sent via communication means from a customer terminal of a customer who owns the coupon; and
coupon use permitting means for permitting a customer who bought goods to use the coupon in the case of the personal authentication having been performed and a goods buying certificate for certifying that the goods for which the coupon had been issued were bought having been sent from the customer terminal.

14. The electronic coupon use supporting system according to claim 13, wherein the customer terminal is a portable remote terminal, the electronic coupon use supporting system further comprising:
personal authentication result information sending means for sending the result of the personal authentication as information being able to be displayed on the screen of the portable remote terminal; and
coupon use permitting information sending means for sending permitting information given by the coupon use permitting means as information being able to be displayed on the screen of the portable remote terminal.
